# EUROPÄISCHE PATENTSCHRIFT

(11) **EP 4 403 338 B1**
(45) Veröffentlichungstag und Bekanntmachung des Hinweises auf die Patenterteilung: **08.01.2025**
(21) Anmeldenummer: 23194052.9
(22) Anmeldetag: 12.01.2023
(51) Int. Cl.: B29C 65/10, B29C 65/20, B29C 65/30, B29C 65/48, E04D 15/04, E04D 5/14, B29L 31/10, B29L 31/52

(54) **VERFAHREN UND FAHRBARER VERBINDUNGSAPPARAT ZUM THERMISCHEN VERBINDEN VON JEWEILS ZWEI BENACHBARTEN MATERIALBAHNEN ÜBER EIN VERBINDUNGSSTÜCK**
METHOD AND MOBILE CONNECTING APPARATUS FOR THE THERMAL CONNECTION OF TWO ADJACENT MATERIAL WEBS THROUGH A CONNECTING PIECE
PROCÉDÉ ET APPAREIL DE RACCORDEMENT MOBILE POUR LE RACCORDEMENT THERMIQUE DE DEUX BANDES DE MATÉRIAU ADJACENTES À TRAVERS UN RACCORD

(43) Veröffentlichungstag der Anmeldung: 24.07.2024
(62) Teilanmeldung aus: 23151276.5
(73) Patentinhaber: Leister Technologies AG, 6056 Kägiswil (CH)
(72) Erfinder: Horand, Silvan, 6010 Kriens (CH); Bürgler, Roger, 6373 Ennetbürgen (CH)
(74) Vertreter: Witte, Weller & Partner Patentanwälte mbB

(56) Entgegenhaltungen:
- JP-A- S59 222 313
- US-A- 3 523 176

## Beschreibung

Die vorliegende Erfindung betrifft ein Verfahren und einen fahrbaren Verbindungsapparat, insbesondere einen verfahrbaren Schweißapparat, zum thermischen Verbinden von zwei benachbarten Materialbahnen über ein flächig auf einer Unterseite liegendes Verbindungsstück, wobei die Materialbahnen mit jeweils einer einander zugewandten Seitenfläche aneinanderstoßend zumindest teilweise mit einer jeweiligen Unterseite auf einer Oberseite des Verbindungsstücks flächig aufliegend angeordnet sind.

Derartige Materialbahnen bestehen typischerweise aus einem anschmelzbaren und/oder aufschmelzbaren Material. Beispielsweise können die Materialbahnen aus einem Kunststoffmaterial, insbesondere aus einem thermoplastischen Kunststoffmaterial bestehen. Bei den Materialbahnen kann es sich aber etwa auch um Bitumenbahnen handeln. Es kann sich jedoch auch um Materialbahnen handeln, deren Material nicht anschmelzbar und/oder aufschmelzbar ist und die an einer Unterseite zumindest teilweise mit einem thermisch aktivierbaren Kleber versehen sind, welcher entsprechend anschmelzbar und/oder aufschmelzbar ist.

Die Materialbahnen sind bahnförmig ausgebildet und daher flächig, teilweise mit einer Oberflächenstruktur. Die Materialbahnen weisen im Vergleich zu ihren lateralen Abmessungen (Länge und Breite) nur eine geringe Höhe (Dicke oder Stärke des Materials) auf. Gleiches gilt für Verbindungsstücke, wobei die Verbindungsstücke bei Längen von mit den Materialbahnen vergleichbarer Größenordnung zumeist deutlich schmaler sind als die Materialbahnen. Die Verbindungsstücke werden daher neben ,bahnförmig` alternativ auch als ,streifenförmig` charakterisiert.

Sowohl die Materialbahnen als auch die Verbindungsstücke werden typischerweise im Vorfeld der Verarbeitung auf Rollen aufgerollt bereitgestellt und zur Verarbeitung am Ort der Verarbeitung auf einem Untergrund abgerollt und verlegt. Der Untergrund kann etwa ein Boden oder eine Wandung eines Bauwerks sein und aus den Materialbahnen wird durch flüssigkeitsdichte Verbindung der Materialbahnen zu einer flüssigkeitsdichten Materialschicht auf dem Untergrund der Untergrund gegenüber sonst möglicherweise ein- oder ausdringenden Flüssigkeiten, z. B. Wasser, abgedichtet. So können etwa (Flach-)Dächer, Becken, Kanäle oder Tunnel abgedichtet werden. Zumeist erfolgt bei der Verarbeitung der Materialbahnen nach der Verlegung von Materialbahnen an den jeweils vorgesehenen Positionen auf einem Untergrund zunächst eine Befestigung der Materialbahnen am Untergrund. Diejenige der beiden über die Dicke einer Materialbahn gegenüberliegenden großen, flächigen Seiten, die bei der Verlegung der Materialbahn auf einem Untergrund oben auf einer Oberseite des Untergrunds flächig aufliegt, wird üblicherweise als Unterseite der Materialbahn bezeichnet. Die andere große flächige Seite, die der Oberseite des Untergrunds abgewandt ist, wird entsprechend als Oberseite der Materialbahn bezeichnet. Als Seitenfläche(n) wird im Folgenden die schmale außenseitige Berandung einer Materialbahn zwischen Oberseite und Unterseite der Materialbahn benannt. Bezüglich Verbindungsstücken wird entsprechend verfahren.

Bei der Verarbeitung von Materialbahnen bei gängigen Anwendungen werden die Materialbahnen überlappend auf einem Untergrund verlegt und verbunden. Dabei liegt eine Materialbahn auf einer direkt benachbarten Materialbahn entlang einander zugewandter Seitenflächen der Materialbahnen zumindest in einem Verbindungsbereich in der Umgebung ihrer einander zugewandten Seitenflächen mit einem Teil der Unterseite auf einem Teil der Oberseite der anderen Materialbahn auf. Handelt es sich bei den Materialbahnen beispielhaft um thermoplastische Kunststoffbahnen, so können die Materialbahnen durch simultanes und sukzessives bereichsweises Erhitzen im Verbindungsbereich zumindest teilweise plastifiziert und unter anschließender Applikation von Druck im Verbindungsbereich miteinander verbunden werden. Mit dem folgenden Erkalten des erhitzten Materials der Materialbahnen ist entlang der einander zugewandten Seitenflächen direkt benachbarter Materialbahnen somit eine überlappende Verbindungsnaht (kurz Überlappnaht) zwischen den Materialbahnen hergestellt. Die im Verbindungsbereich oben auf der anderen Materialbahn aufliegende Materialbahn wird dabei im Verbindungsbereich sukzessive bereichsweise von ihrer Unterseite her erhitzt und die im Verbindungsbereich unten liegende Materialbahn entsprechend simultan von ihrer Oberseite her. Dabei finden häufig aus dem Stand der Technik bekannte, vielfach weitgehend automatisierte Schweißapparate mit Heißluftschweißvorrichtungen oder Kontaktschweißvorrichtungen (,Heizkeilen') zur Erhitzung der zu verbindenden Materialbahnen Verwendung. Damit kann die Verbindung der Materialbahnen sowie gegebenenfalls bereits die Fixierung der Materialbahnen an einem Untergrund schnell und effizient durchgeführt werden.

Bei einigen Anwendungen ist eine überlappende Verlegung und Verbindung von Materialbahnen unerwünscht. Dies kann etwa ästhetische Gründe haben. Eine aus überlappender Verlegung und Verbindung von Materialbahnen resultierende gemeinsame Materialschicht ist an der Oberseite bzw. Oberfläche in Folge des Überlapps nicht glatt und weist an den Überlappnähten Nahtübergänge in Form von Kanten auf. Die Kanten entsprechen den Seitenflächen der aufgrund des Überlapps jeweils oben auf direkt benachbarten Materialbahnen aufliegender Materialbahnen. Ein Beispiel für eine aus ästhetischen Gründen unerwünschte überlappende Verlegung und Verbindung von Materialbahnen ist die Abdichtung von Schwimmbädern (,Pools'). Bei den bei dieser Anwendung verwendeten Materialbahnen handelt es sich typischerweise um PVC-Membranen. Die aus einer überlappenden Verlegung und Verbindung solcher PVC-Membranen in der gemeinsamen Materialoberfläche resultierenden Kanten können durch Applikation einer Nahtversiegelung im Nachgang einer Verbindung der Materialbahnen aus flüssigem PVC kaschiert werden. Dadurch wird der sprunghafte Nahtübergang an den Kanten weicher. Des Weiteren werden dadurch Schmutzansammlungen am Nahtübergang verhindert. Eine vollständige Kaschierung der Überlappnähte bzw. der Kanten in der gemeinsamen Materialoberfläche in dem Sinne, dass die Kanten dadurch unsichtbar' sind, kann jedoch nicht erzielt werden. Insbesondere bei ruhiger Wasseroberfläche und nächtlicher Beleuchtung eines Schwimmbads sind die Nahtübergänge trotz Kaschierung deutlich erkennbar.

Die vorstehend geschilderten Probleme der überlappenden Verlegung und Verbindung von Materialbahnen können durch eine Verlegung und Verbindung der Materialbahnen auf Stoß vermieden werden. Dabei werden direkt aneinander angrenzende, zu verbindende Materialbahnen mit ihren jeweiligen einander zugewandten Seitenflächen aneinander in Anlage bzw. stoßend verlegt und miteinander verbunden. Die Verbindung erfolgt dabei unter dem Einsatz von Verbindungsstücken. Diese werden unterhalb der zu verbindenden Materialbahnen an einem Übergang zwischen je zwei direkt benachbarten zu verbindenden Materialbahnen angeordnet. Die Verbindungsstücke werden dabei in korrespondierende Aussparungen in einer zwischen den zu verbindenden Materialbahnen und einem Untergrund, auf dem die Materialbahnen zur Verbindung verlegt sind, angeordneten Unterlage eingelegt. Die Unterlage kann dabei ebenfalls aus bahnförmigem Material bestehen, z. B. aus Bahnen aus Flies.

Die Verbindung der Materialbahnen über die Verbindungsstücke erfolgt in mindestens zwei wesentlichen Schritten. Dabei wird zunächst eine erste von zwei direkt aneinander angrenzenden und über ein Verbindungsstück zu verbindender Materialbahnen mit dem Verbindungsstück verbunden. Dabei handelt es sich um ein gewöhnliches überlappendes Verbinden zweier Materialbahnen - von denen eine ein Verbindungsstück ist - und kann grundsätzlich etwa mit aus dem Stand der Technik bekannten (automatisierten) Schweißapparaten erfolgen. Anschließend wird die zweite Materialbahn mit dem Verbindungsstück verbunden. Da zusätzlich eine Verbindung mit der anderen Materialbahn durch Verbindung der Materialbahnen entlang ihrer einander zugewandten Seitenflächen erfolgt, handelt es sich dabei nicht um ein gewöhnliches überlappendes Verbinden. Die Verbindung der zweiten Materialbahn mit dem Verbindungsstück und der ersten Materialbahn erfolgt dabei in mehreren Teilschritten von Hand mit Handschweißgeräten, häufig Heißlufthandgeräten, um eine Beschädigung der Sichtkante der ersten Materialbahn durch übermäßige Einwirkung von Wärmeenergie (Verbrennungen) zu vermeiden. Eine Sichtkante einer Materialbahn ist dabei eine obere Seitenkante der Materialbahn, an der die Oberseite und eine Seitenfläche der Materialbahn aneinander angrenzen. Die Verbindung der zweiten Materialbahn mit dem Verbindungsstück und der ersten Materialbahn per Hand ist aufwendig. Um ein adäquates Ergebnis bei Verbindung der zweiten Materialbahn mit dem Verbindungsstück und der ersten Materialbahn zu erzielen, sind zumeist mindestens zwei die Verbindung ausführende Personen notwendig, die einander zur Hand gehen.

US 3,523,176 offenbart ein elektrisches Bügeleisen für wärmeempfindliches Klebeband zum Säumen von Teppichen.

Vor diesem Hintergrund ist es eine Aufgabe der vorliegenden Offenbarung, ein Verfahren und einen fahrbaren Verbindungsapparat mit einer verbesserten Vorrichtung zum thermischen Verbinden von zwei Materialbahnen mit einem Verbindungsstück bereitzustellen. Insbesondere wäre es wünschenswert, einen fahrbaren Verbindungsapparat mit einer Vorrichtung bereitzustellen, mit welcher die Arbeitsgeschwindigkeit erhöht werden kann. Ferner wäre es wünschenswert, eine Nahtqualität beim Stumpfschweißnähten der Seitenkanten benachbarter Materialbahnen über einem darunter liegenden Verbindungsstück weiter zu verbessern.

Die beanspruchten Gegenstände sind in den unabhängigen Ansprüchen definiert. Gemäß Aspekten der vorliegenden Offenbarung werden ein Verfahren zum Verbinden von jeweils zwei Materialbahnen über ein Verbindungsstück mit den Merkmalen des Anspruchs 13 und ein fahrbarer Verbindungsapparat zur Verbindung von jeweils zwei Materialbahnen über ein Verbindungsstück mit den Merkmalen des Anspruch 1 bereitgestellt. Weitere vorteilhafte Ausgestaltungen sind den jeweiligen abhängigen Ansprüchen zu entnehmen.

Demnach weist eine vorgeschlagene Vorrichtung des fahrbaren Verbindungsapparats zum thermischen Verbinden von jeweils zwei Materialbahnen einen Basiskörper mit einer Vorderkante, einer der Vorderkante gegenüberliegenden Hinterkante und zwei sich gegenüberliegende Längskanten auf, wobei sich eine Oberflächenseite und eine der Oberflächenseite gegenüberliegende Unterflächenseite des Basiskörpers jeweils sowohl zwischen der Vorderkante und der Hinterkante als auch zwischen den beiden Längskanten erstrecken. Dabei können die Oberflächenseite, die Unterflächenseite, die Vorderkante, die Hinterkante und die beiden Längskanten ein Volumen des Basiskörpers vollständig beranden. Die Vorrichtung kann insbesondere bezüglich des Basiskörpers zwischen der Oberseite des Verbindungsstücks und den Unterseiten der Materialbahnen hindurchführbar ausgebildet sein. Dabei kann die Oberflächenseite des Basiskörpers zu den Unterseiten der Materialbahnen und die Unterflächenseite zu der Oberseite des Verbindungsstücks hingewandt sein. Des Weiteren kann der Basiskörper der Vorrichtung dazu ausgebildet sein, die Materialbahnen zumindest in an ihre Seitenflächen angrenzenden Bereichen ihrer jeweiligen Unterseite von der Vorderkante zu der Hinterkante derart über die Oberflächenseite zu führen, dass die Materialbahnen ausgehend von der Vorderkante des Basiskörpers zumindest über ein Vierteil, insbesondere über zumindest eine Hälfte, insbesondere zumindest über Zweidrittel und insbesondere zumindest über Dreiviertel einer maximalen Erstreckung des Basiskörpers zwischen der Vorderkante und der Hinterkante mit ihrer jeweils einander zugewandten Seitenfläche voneinander beabstandet geführt sind. Zusätzlich kann die Vorrichtung dazu ausgebildet sein, simultan jeweils zumindest teilweise die Unterseite der Materialbahnen, die Oberseite des Verbindungsstückes und die jeweils einander zugewandte Seitenfläche der Materialbahnen derart zu erhitzen, dass (zugleich) jeweils zwischen jeder der beiden Materialbahnen und dem Verbindungsstück sowie zwischen den Materialbahnen zueinander parallele Verbindungen, insbesondere parallele Schweißnähte herstellbar sind.

Mit anderen Worten kann die vorgeschlagene Vorrichtung des fahrbaren Verbindungsapparats als Stumpfschweißvorrichtung ausgebildet sein. Im Rahmen der vorliegenden Offenbarung kann unter einer Schweißvorrichtung auch eine Vorrichtung zum thermischen Verbinden verstanden werden. Die vorgeschlagene Vorrichtung kann dazu ausgebildet sein, zwischen den beiden Stumpf and Stumpf liegenden Materialbahnen und dem darunter liegenden Verbindungsstreifen zu gleiten und dabei beidseitig in einem Schritt zwei parallele Schweißnähte zu erzeugen. Gleichzeitig können dabei die beiden Stümpfe, d.h. die einander zugewandten (kurzen) Seiten der Materialbahnen zumindest teilweise miteinander verschweißt bzw. thermisch miteinander verbunden werden.

Die vorgeschlagene Lösung kann einen oder mehrere der nachfolgenden Vorteile bieten. Indem die thermische Verbindung der zwei Materialbahnen und vorzugsweise auch des bahnförmigen Verbindungsstücks in einem Arbeitsgang hergestellt werden können, können mehrere Arbeitsschritte eingespart werden. Dadurch kann die Arbeitszeit verkürzt und die Effizienz z.B. beim Herstellen von Stumpfschweißnähten gesteigert werden. Ein weiterer Vorteil kann in einer gesteigerten Schweißqualität bestehen. Die thermische Verbindung kann in einem Arbeitsgang mit konstant wirkenden Prozessparametern ausgeführt werden. Ein weiterer Vorteil kann in einer physiologischen Entlastung des Bedieners bestehen, insbesondere in Verbindung der Vorrichtung mit einem fahrbaren Verbindungsapparat. Ein weiterer Vorteil kann in einer sortenreinen Verbindung der Materialbahnen bestehen. Anders als bei herkömmlich Vorgehen, bei welchen beispielsweise ein zusätzlicher Kleber eingesetzt wurde oder ein Nahtübergang bzw. Überlapp mit einer Fugenmasse kaschiert wurde, kann eine thermisch hergestellte sortenreine Verbindung hergestellt werden. Ferner können sich für die Vorrichtung einsetzenden Unternehmen Vorteile ergeben, wie beispielsweise eine Angebotserweiterung, eine Stärkung der Marktposition als innovatives Unternehmen, eine Sicherstellung einer exklusiven Lösung beispielsweise bei (fugenlosen) Schwimmbädern oder Sportbelägen, insbesondere im Au-ßenbereich.

Der Basiskörper kann derart ausgebildet sein, dass die beiden Materialbahnen derart über die Oberflächenseite des Basiskörpers führbar sind, dass die beiden Materialbahnen an der zweiten Stirnkante bzw. an der Hinterkante des Basiskörpers (wieder) mit ihren einander zugewandten Seitenfläche aneinanderstoßen. Besonders bevorzugt gehen die zueinander parallelen Schweißnähte zwischen der Unterseite der Materialbahnen und der Oberseite des Verbindungsstücks sowie zwischen den beiden Materialbahnen abstandslos ineinander über und bilden eine gemeinsame Schweißnaht.

Die Vorrichtung des fahrbaren Verbindungsapparats kann als Heißluftheizvorrichtung oder als Teil einer Heißluftheizvorrichtung, insbesondere in der Art einer Heißluftdüse, ausgebildet sein. Die Materialbahnen und das Verbindungsstück werden dabei zur Erhitzung über die Vorrichtung mit Heißluft beaufschlagt. Alternativ kann eine erfindungsgemäße Vorrichtung als Kontaktheizvorrichtung ausgebildet sein. Die Erhitzung der Materialbahnen und des Verbindungsstücks erfolgt dabei durch Wärmeübertragung im Zuge von thermischem Kontakt zwischen der Vorrichtung, insbesondere dem Basiskörper der Vorrichtung, und den Materialbahnen sowie dem Verbindungsstück. Wegen grundsätzlich erfolgendem physischen Kontakt zwischen einer erfindungsgemäßen Vorrichtung und den Materialbahnen sowie dem Verbindungstück bei einer Verbindung der Materialbahnen über das Verbindungsstück kann auch bei einer Ausgestaltung der Vorrichtung als Heißluftdüse oder dergleichen Wärmeübertragung durch thermischen Kontakt zwischen der Vorrichtung und den Materialbahnen sowie dem Verbindungsstück erfolgen. Im Wesentlichen erfolgt die Erhitzung der Materialbahnen und des Verbindungsstücks jedoch durch Beaufschlagung mit Heißluft.

Die Vorrichtung des fahrbaren Verbindungsapparats ist vorzugsweise aus einem hitzebeständigen Material ausgebildet. Bei einer Ausbildung der Vorrichtung als Kontaktheizvorrichtung ist zudem eine Ausbildung aus einem gut wärmeleitenden Material bevorzugt. Die Vorrichtung kann mehrstückig oder einstückig ausgebildet sein, wobei eine einstückige Ausbildung bevorzugt wird. Die Vorrichtung kann mittels eines additiven Fertigungsverfahrens (,3D-Druck`) hergestellt sein.

Im Rahmen der vorliegenden Offenbarung können die Vorderkante, die Hinterkante und die Seitenkanten eines Basiskörpers der Vorrichtung nicht nur als linienartig verstanden werden, sondern gegebenenfalls alternativ und/oder zusätzlich als flächenartig/flächig. Die Vorderkante, die Hinterkante, die Längskanten, die Oberflächenseite und die Unterflächenseite können segmentiert sein, also aus jeweils wenigstens zwei Segmenten gebildet sein. Die Vorderkante ist diejenige Kante des Basiskörpers der Vorrichtung, die bei einer Verbindung von jeweils zwei Materialbahnen über ein Verbindungsstück bei einer Bewegung der Vorrichtung relativ zu den Materialbahnen und dem Verbindungsstück in eine (Vorschub-) Richtung entlang der einander zugewandten Seitenflächen der Materialbahnen vorne liegt und der Richtung der Bewegung zugewandt ist. Die Hinterkante liegt dementsprechend in Richtung der Bewegung hinten und ist der Richtung der Bewegung abgewandt. Zur Verbindung von jeweils zwei Materialbahnen über ein Verbindungsstück kann die Vorrichtung relativ zu den Materialbahnen und dem Verbindungsstück entlang der einander zugewandten Seitenflächen der Materialbahnen bewegt werden, wobei die Materialbahnen und das Verbindungsstück als ruhend angesehen werden. Alternativ können jedoch auch die Materialbahnen und das Verbindungsstück gegenüber der als ruhend angesehen Vorrichtung bewegt werden.

Die vorgeschlagene Vorrichtung des fahrbaren Verbindungsapparats zur Verbindung von jeweils zwei Materialbahnen über ein Verbindungstück kann insbesondere eine Verbindung der Materialbahnen über das Verbindungsstück in einem Zug ermöglichen. Ein Vorteil der vorgeschlagenen Lösung kann insbesondere darin bestehen, dass keine weiteren Arbeiten bzw. Arbeitsschritte zum Verbinden der erste Materialbahn mit der zweiten Materialbahn notwendig sind. Ferner können sowohl die erste Materialbahn als auch die zweite Materialbahn in einem Zug mit dem Verbindungsstückverbunden werden.

Der Basiskörper der Vorrichtung des fahrbaren Verbindungsapparats kann als Hohlkörper ausgebildet sein und zumindest eine Öffnung zum Austritt von Heißluft aus dem Hohlkörper an der Hinterkante des Basiskörpers in einen Hohlraum zwischen der Hinterkante des Basiskörpers, der Oberseite des Verbindungsstücks und den Unterseiten der Materialbahnen aufweisen. Der Basiskörper bzw. die Vorrichtung als Ganzes kann damit in der Art einer Heißluftdüse ausgebildet sein. Durch den zumindest einen Luftaustritt an der Hinterkante kann Heißluft zwischen die Materialbahnen und das Verbindungsstück gelangen und damit die Materialbahnen unterseitig sowie das Verbindungsstück oberseitig erhitzt werden.

Die Oberflächenseite und/oder die Unterflächenseite des Basiskörpers der Vorrichtung kann zumindest eine Öffnung zum Austritt von Heißluft aus dem Basiskörper aufweisen. Durch eine oder mehrere Öffnungen an der Oberflächenseite des Basiskörpers kann Heißluft aus dem Basiskörper zu einer Unterseite der Materialbahnen hinaustreten. Dadurch können die Materialbahnen unterseitig bereits vorgewärmt bzw. vorerhitzt werden, bevor der (wesentliche) Teil der Heißluft, welcher durch die zumindest eine Öffnung an der Hinterkante des Basiskörpers aus dem Basiskörper austritt, auf die Unterseiten der Materialbahnen trifft und diese weiter erhitzt. Durch eine oder mehre Öffnungen an der Unterflächenseite des Basiskörpers kann Heißluft aus dem Basiskörper zu der Oberseite des Verbindungsstücks hinaustreten. Dadurch kann das Verbindungsstück oberseitig bereits vorgewärmt bzw. vorerhitzt werden, bevor der (wesentliche) Teil der Heißluft, welcher durch die zumindest eine Öffnung an der Hinterkante des Basiskörpers aus dem Basiskörper austritt, auf die Oberseite der Materialbahnen trifft und diese weiter erhitzt. Durch das Vorsehen zusätzlicher Öffnungen zum Austritt von Heißluft aus dem Basiskörper an dessen Oberflächenseite und/oder an dessen Unterflächenseite kann die Erhitzung der zu verbindenden Materialbahnen und des Verbindungsstücks weiter verbessert werden, etwa bezüglich der Schnelligkeit, mit der die Erhitzung erfolgt. Die Arbeitsgeschwindigkeit kann damit weiter gesteigert werden.

Aus der Oberflächenseite des Basiskörpers kann eine Finne herausstehen. Die Finne kann sich dabei parallel zu der maximalen Erstreckung des Basiskörpers zumindest teilweise zwischen der Vorderkante und der Hinterkante erstrecken. Von einem von der Oberflächenseite abgewandtes Ende der Finne her kann Heißluft durch die Finne hindurch in den Basiskörper einbringbar sein. Die Finne ist daher wenigstens teilweise als Hohlkörper ausgebildet und/oder weist einen oder mehrere Hohlkörper auf, durch die Heißluft in den als Hohlkörper ausgebildeten Basiskörper einbringbar ist. Der oder die Hohlkörper der Finne erstrecken sich vorzugsweise zwischen dem von der Oberflächenseite Ende der Finne bis zu einem jeweiligen Übergang zum Hohlkörper des Basiskörpers durch die Finne hindurch.

Die Finne ist kann einstückig mit dem Basiskörper ausgebildet sein. Eine maximale Erstreckung der Finne in eine Richtung parallel zu einer maximalen Erstreckung des Basiskörpers zwischen dessen beiden Längskanten kann kürzer sein als die maximale Erstreckung des Basiskörpers zwischen dessen beiden Längskanten. Beispielsweise kann sich die Finne parallel zu der maximalen Erstreckung des Basiskörpers zwischen dessen Längskanten auf höchstens ein Viertel, insbesondere auf höchstens ein Fünftel und insbesondere auf höchstens ein Sechstel der maximalen Erstreckung des Basiskörpers zwischen den Längskanten erstrecken. Vorzugsweise kann die maximale Erstreckung der Finne in eine Richtung parallel zu der maximalen Erstreckung des Basiskörpers zwischen dessen beiden Längskanten zudem deutlich kleiner als eine maximale Erstreckung der Finne in eine Richtung parallel zu einer maximalen Erstreckung des Basiskörpers zwischen dessen Vorderkante und Hinterkante sein. Beispielsweise beträgt die maximale Erstreckung der Finne in eine Richtung parallel zu der maximalen Erstreckung des Basiskörpers zwischen dessen Längskanten lediglich ein Drittel, ganz besonders bevorzugt höchstens ein Viertel und sehr besonders bevorzugt höchstens ein Sechstel einer maximalen Erstreckung der Finne in eine Richtung parallel zu einer maximalen Erstreckung des Basiskörpers zwischen dessen Vorderkante und Hinterkante. Beispielsweise erstreckt sich die Finne in eine Richtung parallel zu der maximalen Erstreckung des Basiskörpers zwischen dessen Vorderkante und Hinterkante nicht bis zu der Hinterkante des Basiskörpers, sondern endet vorzugsweise mindestens in einem Abstand von einem Sechstel der maximalen Erstreckung des Basiskörpers zwischen dessen Vorderkante und Hinterkante vor der Hinterkante des Basiskörpers.

Die Oberflächenseite des Basiskörpers kann dazu ausgebildet sein, die Materialbahnen derart an der Finne vorbeizuführen, dass ein thermischer Kontakt zwischen einer unteren Seitenkante einer Materialbahn an einem Übergang zwischen der jeweiligen Unterseite zu der jeweiligen Seitenfläche der Materialbahnen entlang einer Erstreckung der Finne zwischen der Vorderkante und der Hinterkante nur auf einer zweiten Hälfte, insbesondere nur auf einem letzten Drittel und insbesondere nur auf einem letzten Viertel einer Erstreckung der Finne zwischen der Vorderkante und der Hinterkante des Basiskörpers erfolgt. Durch eine entsprechende Ausgestaltung wird das Risiko für einen übermäßigen Eintrag von Wärmenergie unter thermischen Kontakt zwischen den einander zugewandten Seitenflächen der Materialbahnen und der Finne und daraus gegebenenfalls resultierende Beschädigungen der Materialbahnen im Bereich der jeweiligen Seitenfläche bzw. Stoßfläche für eine Stoßnaht der Seitenflächenverringert.

Das Ende der Finne kann an ein Schaftrohr anschließen, welches zur Führung eines Luftstroms zum Ende der Finne und zugleich zur Fixierung an einem Heißluftgerät in einem zum Austritt des von einem Heißluftgerät erzeugbaren Heißluftstroms vorgesehenen Bereich des Heißluftgeräts ausgebildet ist. Das Schaftrohr kann dabei etwa auf ein austrittsseitiges, zum Austritt von Heißluft vorgesehenes Ende eines Heizrohres eines Heißluftgeräts aufsetzbar und/oder fixierbar sein. Das Heißluftgerät wiederum kann etwa Teil eines Heißluftschweißapparaten, z. B. eines Heißluftschweißautomaten sein. Mit anderen Worten kann das Schaftrohr an einer Oberseite der Finne vorgesehen sein. Es kann einerseits der Befestigung der Vorrichtung dienen und/ oder die Eintrittsöffnung für Heißluft dienen.

Die Unterseitenfläche des Basiskörpers kann konkav ausgestaltet sein. Die Unterflächenseite des Basiskörpers kann bei einer entsprechenden Ausgestaltung also nach innen gewölbt sein. Dadurch ergibt sich zwischen der Unterflächenseite des Basiskörpers und der Oberseite des Verbindungsstücks ein Hohlraum in welchen, bei Vorsehung zumindest einer entsprechenden Öffnung in der Unterflächenseite zum Austritt von Heißluft aus dem Basiskörper, Heißluft einbringbar ist. Dadurch kann eine oberseitige Vorerhitzung und die oberseitige Erhitzung des Verbindungsstücks insgesamt noch weiter verbessert werden. Der Hohlraum ist dabei vorzugsweise nicht vollständig geschlossen, um einen Luftstau in dem Hohlraum zu vermeiden. Insbesondere kann der Hohlraum zumindest im Bereich der Hinterkante des Basiskörpers offen sein. Dabei kann der Basiskörper an einem Übergang zwischen der Unterflächenseite und der Hinterkante etwa derart ausgebildet sein, dass sich zwischen der Unterkante des Basiskörpers und der Oberseite des Verbindungsstücks zumindest eine Öffnung des Hohlraums zu einer Umgebung ergibt.

Die Vorrichtung des fahrbaren Verbindungsapparats kann als elektrisch beheizbare Kontaktheizvorrichtung ausgebildet sein. Bei dieser Ausgestaltung kann die oberseitige Erhitzung des Verbindungsstücks und/oder die unterseitige Erhitzung der Materialbahnen durch Übertragung von Wärmenergie unter thermischem Kontakt - bei gleichzeitigem physischen Kontakt - zwischen dem Basiskörper der Vorrichtung und dem Verbindungsstück sowie den Materialbahnen erfolgen. Dabei können wenigstens größere Teile der Oberflächenseite des Basiskörpers in (sukzessivem) thermischem Kontakt mit Teilen der jeweiligen Unterseite der Materialbahnen und gleichzeitig wesentliche Teile der Unterflächenseite des Basiskörpers in (sukzessivem) thermischen Kontakt mit Teilen der Oberseite des Verbindungsstücks sein.

Beispielsweise kann vorgesehen sein, dass die Vorrichtung zumindest teilweise aus einem direkt elektrisch bestrombaren Heizblech ausgebildet ist. Das Heizblech oder die Heizbleche können dabei zumindest einen Teil der Oberflächenseite und/oder der Unterflächenseite des Basiskörpers der Vorrichtung bilden. Alternativ oder zusätzlich kann vorgesehen sein, dass die Vorrichtung zum thermischen Verbinden von jeweils zwei Materialbahnen zumindest teilweise als massiver Materialblock aus einem thermisch leitfähigen Material mit zumindest einer Aufnahme für wenigstens ein elektrisches Heizelement ausgebildet ist. Ein derartiges elektrisches Heizelement kann eine Heizpatrone sein, welche etwa in einer dafür an einem vorzugsweise massiv ausgeführten Teilbereich des Basiskörpers der Vorrichtung vorgesehenen Bohrung zumindest teilweise in dem Basiskörper anordenbar ist.

Von der Oberflächenseite des Basiskörpers können wenigstens zwei Leitprofile nach außen abstehen, wobei sich die Leitprofile zumindest teilweise zwischen der Vorderkante und der Hinterkante über die erste Oberflächenseite erstrecken können. Die Leitprofile können dazu ausgebildet sein, die Materialbahnen für wenigstens ein Viertel, insbesondere wenigstens eine Hälfte, insbesondere wenigstens Zweidrittel und insbesondere wenigstens Dreiviertel der maximalen Erstreckung des Basiskörpers zwischen der Vorderkante und der Hinterkante mit ihrer jeweiligen Seitenfläche voneinander beabstandet über die Oberflächenseite zu führen und die Materialbahnen auf die Hinterkante zulaufend mit den Seitenflächen aneinander stoßend in Anlage zu bringen.

Durch Vorsehen von Leitprofilen an der Oberflächenseite kann die Führung der Materialbahnen über die Oberflächenseite des Basiskörpers der Vorrichtung und dabei insbesondere das Zusammenführen der Materialbahnen an der Hinterkante des Basiskörpers derart verbessert werden, dass die Materialbahnen mit den einander zugewandten Seitenflächen (wieder) aneinanderstoßen. Sofern die Vorrichtung eine Finne aufweist, kann zudem die Führung der Materialbahnen über die Oberflächenseite des Basiskörpers der Vorrichtung im Hinblick auf die grundsätzliche Vermeidung von thermischem Kontakt oder zumindest die Vermeidung von übermäßigem Eintrag von Wärmeenergie in die Seitenflächen unter thermischen Kontakt zwischen den einander zugewandten Seitenflächen der Materialbahnen und der Finne der Vorrichtung ebenfalls verbessert werden.

Gemäß einem weiteren Aspekt wird ein Verfahren zum thermischen Verbinden von jeweils zwei Materialbahnen über ein bahnförmiges Verbindungsstück vorgeschlagen mit den Schritten:
a. Bereitstellen zumindest eines flächig auf einer Unterseite liegenden Verbindungsstücks und zweier über das Verbindungsstück zu verbindender Materialbahnen, welche mit jeweils einer einander zugewandten Seitenkante aneinanderstoßend jeweils zumindest teilweise mit einer Unterseite auf einer Oberseite des Verbindungsstücks flächig aufliegend angeordnet sind;
b. Zumindest teilweises (sukzessives und/oder simultanes) Erhitzen der Unterseiten der Materialbahnen, der Seitenkanten der Materialbahnen und der Oberseite des Verbindungsstücks in einem Verbindungsbereich derart, dass sich im Verbindungsbereich zwischen jeder der Materialbahnen und dem Verbindungsstück sowie zwischen den Materialbahnen zugleich zueinander parallele Zonen angeschmolzenen und/oder aufgeschmolzenen Materials der Materialbahnen sowie angeschmolzenen und/oder aufgeschmolzenen Materials des Verbindungsstücks ausbilden, die vorzugsweise abstandslos ineinander übergehen;
c. Applikation von Druck im Verbindungsbereich auf die Materialbahnen von deren Oberseiten her im unmittelbaren Nachgang des Erhitzens zur simultanen Ausbildung von jeweils einer Verbindung (Verbindungsnaht bzw. Schweißnaht) zwischen jeder der Materialbahnen und dem Verbindungsstück sowie einer weiteren Verbindung (Verbindungsnaht bzw. Schweißnaht) zwischen den Materialbahnen bei Erkalten des in den Zonen durch Erhitzung angeschmolzenen und/oder aufgeschmolzenen Materials der Materialbahnen und des angeschmolzenen und/oder aufgeschmolzenen Materials des Verbindungsstücks, wobei sich die Schweißnähte parallel abstandslos zueinander erstrecken.

Ein Vorteil des vorgeschlagenen Verfahrens zum thermischen Verbinden von jeweils zwei Materialbahnen über ein Verbindungsstück kann darin bestehen, dass die Materialbahnen schnell und effizient in einem Zug mit den jeweiligen einander zugewandten Seitenflächen aneinander anstoßend miteinander verbunden werden. Ferner kann im gleichen Arbeitsschritt eine Verbindung mit dem darunterliegenden Verbindungsstück hergestellt werden.

Das Erhitzen der Unterseite der Materialbahnen, der Seitenkanten der Materialbahnen und der Oberseite des Verbindungsstücks im Verbindungsbereich kann mittels einer Vorrichtung zum thermischen Verbinden von jeweils zwei Materialbahnen entsprechend einer der Ausgestaltungen oder entsprechend einer beliebigen Kombination der Ausgestaltungen wie in vorstehenden Abschnitten beschrieben erfolgen.

Gemäß einem weiteren Aspekt der vorliegenden Offenbarung wird ein fahrbarer Verbindungsapparat, insbesondere ein fahrbarer Schweißapparat, zum Verbinden von jeweils zwei Materialbahnen über ein flächig auf einer Unterseite liegendes, bahnförmiges Verbindungsstück, wobei die Materialbahnen mit jeweils einer einander zugewandten Seitenfläche aneinander stoßend zumindest teilweise mit einer Unterseite auf einer Oberseite des Verbindungsstücks flächig aufliegend angeordnet sind, weist zumindest einen Tragrahmen und ein aus jeweils wenigstens einer an dem Tragrahmen angeordneten Andruckrolle und Fahrrolle gebildetes Fahrgestell aufweist. Dabei kann bezogen auf eine bevorzugte Bewegungsrichtung bzw. Vorschubrichtung des Schweißapparats entlang der Seitenflächen der Materialbahnen bei der Verbindung der Materialbahnen die Fahrrolle am Tragrahmen in einem vorderen Bereich des Tragrahmens und die Andruckrolle in einem hinteren Bereich des Tragrahmens angeordnet sein. Ein derartiger fahrbarer Verbindungsapparat kann eine Vorrichtung zum thermischen Verbinden von jeweils zwei Materialbahnen entsprechend einer der Ausgestaltungen oder entsprechend einer beliebigen Kombination der Ausgestaltungen wie in vorstehenden Abschnitten beschrieben aufweisen.

Die Vorrichtung zum thermischen Verbinden von jeweils zwei Materialbahnen gegenüber dem Fahrgestell des Verbindungsapparats höhenverstellbar ausgebildet sein. Die Vorrichtung kann also gegenüber einer Ebene, in der der Schweißapparat auf einem ebenen Untergrund bewegbar ist, entlang einer Vertikalen zu dieser Ebene verstellbar ausgebildet ist. Ein Vorteil dieser Ausgestaltung kann darin bestehen, dass Materialbahnen von unterschiedlichen Stärken bearbeitet werden können. Beispielsweise haben Kunststoffdichtungsbahnen üblicherweise eine geringere Dicke als Sportbelagsbahnen für den Außenbereich.

Der Verbindungsapparat kann zumindest eine in der bevorzugten Bewegungsrichtung bzw. Vorschubrichtung des Verbindungsapparats vor und/oder nach der Vorrichtung angeordnete Führungshilfe (auch als Führungsvorrichtung bezeichnet) zur optischen Anzeige der Lage der einander zugewandten und aneinanderstoßenden Seitenflächen der Materialbahnen aufweisen. Dadurch wird einem Bediener die Ausrichtung der Vorrichtung zum thermischen Verbinden von jeweils zwei Materialbahnen entlang der einander zugewandten Seitenfläche der zu verbindenden Materialbahnen zu Beginn des Verbindungsvorgangs erleichtert. Sofern ein erfindungsgemäßer Verbindungsapparat als Halbautomat ausgebildet ist, also von einem Bediener zu führen ist, wird einem Bediener dadurch das Führen des Verbindungsapparats entlang der einander zugewandten Seitenflächen der zu verbindenden Materialbahnen bei der Verbindung der Materialbahnen mit dem Verbindungsapparat erleichtert. Eine Führungshilfe kann integral mit einer Fahrrolle und/oder einer Andruckrolle ausgebildet sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Beispielhafte Ausführungsformen der Erfindung sind in nachfolgenden Zeichnungen dargestellt und werden in der nachfolgenden Beschreibung näher erläutert. Weitere Vorteile, Merkmale und Einzelheiten von Aspekten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen:
- Fig. 1: eine schematische Darstellung einer Ausgangssituation bei der Verbindung von jeweils zwei Materialbahnen über ein Verbindungsstück;
- Fig. 2: eine erste perspektivische Ansicht eines Ausführungsbeispiels einer Vorrichtung des fahrbaren Verbindungsapparats zum thermischen Verbinden von jeweils zwei Materialbahnen über ein flächig auf einer Unterseite liegendes, bahnförmiges Verbindungsstück ausgebildet in der Art einer Heißluftdüse;
- Fig. 3: eine zweite perspektivische Ansicht der Vorrichtung aus Fig. 2;
- Fig. 4: eine Rückansicht der Vorrichtung aus den Figuren 2 und 3;
- Fig. 5: eine erste perspektivische Ansicht eines weiteren Ausführungsbeispiels einer Vorrichtung des fahrbaren Verbindungsapparats zum thermischen Verbinden von jeweils zwei Materialbahnen über ein flächig auf einer Unterseite liegendes, bahnförmiges Verbindungsstück ausgebildet als Kontaktheizvorrichtung;
- Fig. 6: eine zweite perspektivische Ansicht der Vorrichtung aus Fig. 5;
- Fig. 7: eine Rückansicht der Vorrichtung aus den Figuren 5 und 6;
- Fig. 8: eine erste perspektivische Darstellung eines Ausführungsbeispiels eines Verbindungsapparats, insbesondere fahrbaren Schweißapparats, in einer Stellung in Vorbereitung eines Verbindungsvorgangs zur Verbindung von zwei Materialbahnen über ein Verbindungsstück;
- Fig. 9: eine zweite perspektivische Darstellung des fahrbaren Verbindungsapparats aus Fig. 8 in einer Stellung bei der Verbindung von zwei Materialbahnen; und
- Fig. 10: eine schematische Darstellung der zwei über ein Verbindungsstück zu verbindenden Materialbahnen aus Fig. 1 nach einer erfolgten Verbindung.

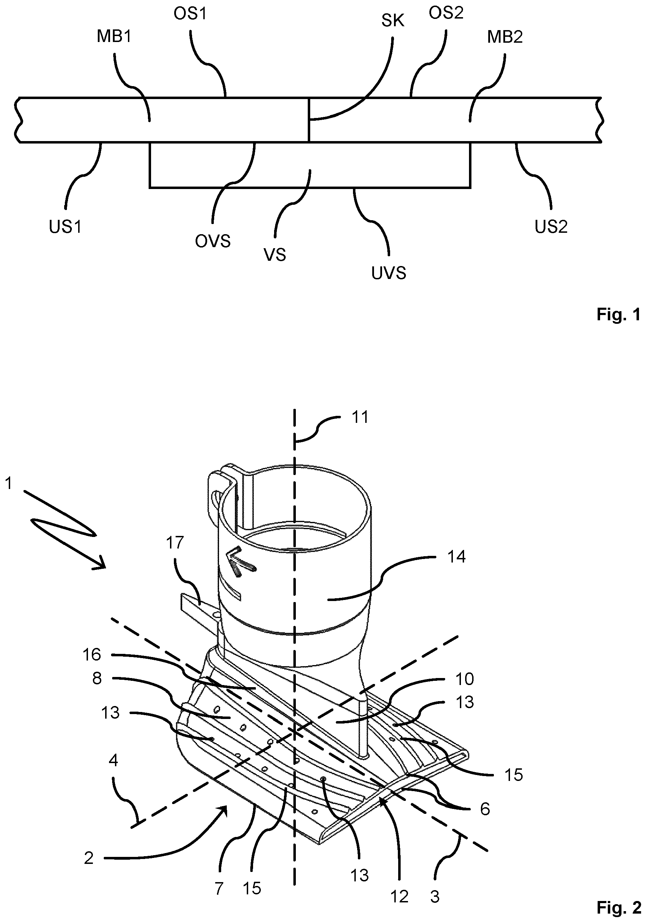

In Fig. 1 ist die Ausgangssituation bei der Verbindung von jeweils zwei Materialbahnen MB1, MB2 über ein flächig liegendes Verbindungsstück VS dargestellt. Die in einem Schnitt in einer Querrichtung zu parallelen Längsrichtungen der Materialbahnen MB1 und MB2 sowie dem Verbindungsstück VS gezeigte Anordnung aus den beiden Materialbahnen MB1 und MB2 sowie dem Verbindungsstück liegt flächig auf einem in der Fig. 1 der Übersichtlichkeit halber nicht dargestellten ebenen Untergrund. Der Untergrund kann etwa der Boden eines Schwimmbeckens sein. Das Verbindungsstück VS liegt dabei in einer dafür vorgesehenen Aussparung einer Unterlage für die Materialbahnen MB1 und MB2, welche in Fig. 1 ebenfalls nicht gezeigt ist. Die Unterlage kann aus flächig auf dem Untergrund ausgelegten Bahnen aus Flies gebildet sein. Das Verbindungsstück VS liegt mit einer Unterseite UVS (= Unterseite Verbindungsstück) flächig auf dem Untergrund auf. Auf einer der Unterseite UVS gegenüberliegenden Oberseite OVS (= Oberseite des Verbindungsstücks) des Verbindungsstücks VS liegen randseitige Bereiche einer Unterseite US1 der Materialbahn MB2 und einer Unterseite US2 der Materialbahn MB2 in der Umgebung jeweiliger einander zugewandter Seitenflächen der Materialbahnen MB1 und MB2 flächig auf. Außerhalb der jeweiligen randseitigen Bereiche der Materialbahnen MB1 und MB2 liegen die Unterseiten auf einer Oberseite der nicht dargestellten Unterlage flächig auf. Die Materialbahnen MB1 und MB2 sind mit ihrer jeweiligen einander zugewandten Seitenfläche aneinanderstoßend gegenseitig in Anlage. In der schematischen Darstellung in Fig. 1 wird dies durch die Stoßkante SK dargestellt.

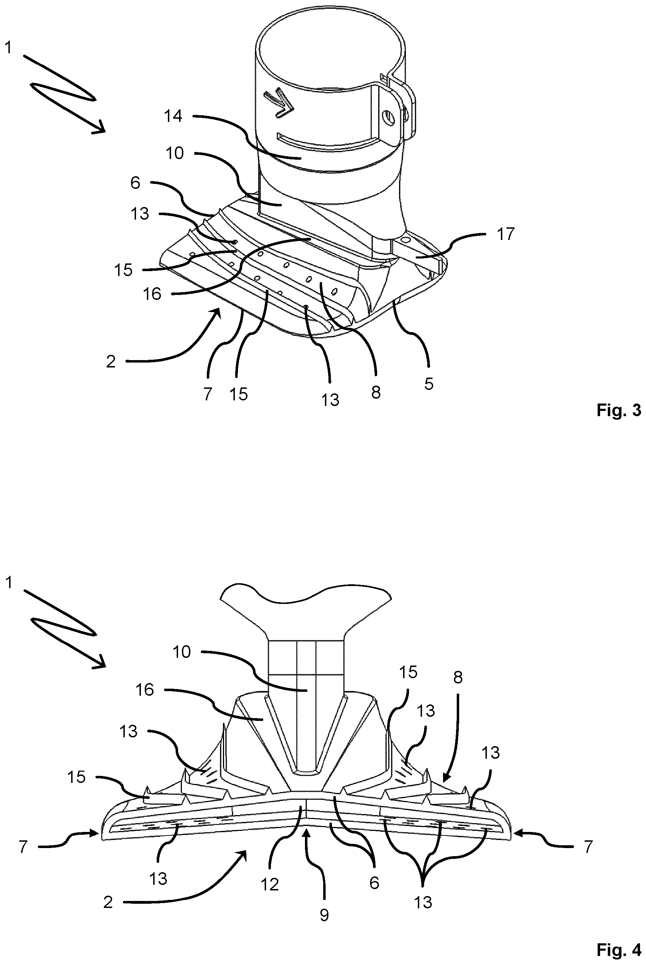

In den Fig. 2 bis Fig. 4 ist ein beispielhaftes Ausführungsbeispiel einer Vorrichtung 1 eines fahrbaren Verbindungsapparats zur Verbindung von jeweils zwei Materialbahnen, d.h. einer ersten Materialbahn MB1 und einer zweiten Materialbahn MB2, über ein flächig liegendes Verbindungsstück VS in der Art einer Heißluftdüse gezeigt. Die Fig. 2 und Fig. 3 zeigen die Vorrichtung 1 in einer jeweils verschiedenen perspektivischen Darstellung. Die Fig. 4 zeigt die Vorrichtung 1 in einer Rückansicht. In Fig. 2 sind zur Beschreibung der Vorrichtung 1 Achsen 4, 5 und 11 gezeigt, welche in den Fig. 3 und Fig. 4 der Übersichtlichkeit halber nicht gezeigt sind. Aus dem gleichen Grund wurde in den Fig. 2 bis Fig. 4 auf eine Darstellung von Materialbahnen MB1 und MBs sowie Verbindungsstück VS verzichtet.

Die Vorrichtung 1 des fahrbaren Verbindungsapparats weist einen Basiskörper 2 auf. Im gezeigten Ausführungsbeispiel der Vorrichtung 1 in der Art einer Heißluftdüse ist der Basiskörper 2 als Hohlkörper ausgebildet. Die Basiskörper 2 erstreckt sich in einer von einer Längsachse 3 und einer ersten Querachse 4 aufgespannten Ebene in eine Richtung der Längsachse 3 zwischen einer Vorderkante 5 und einer Hinterkante 6 und zugleich in eine Richtung entlang der ersten Querachse 4 zwischen zwei Längskanten 7. Der Basiskörper 2 wird in Fig. 1 oberseitig von einer Oberflächenseite 8 und unterseitig von einer Unterflächenseite 9 berandet bzw. begrenzt. Die Oberflächenseite 8 und die Unterflächenseite 9 erstrecken sich jeweils zwischen der Vorderkante 5 und der Hinterkante 6 sowie zwischen den beiden Längskanten 7. Die Oberflächenseite 8 und die Unterflächenseite 9 liegen sich dabei in einer Richtung entlang einer zweiten Querachse 11 beabstandet gegenüber.

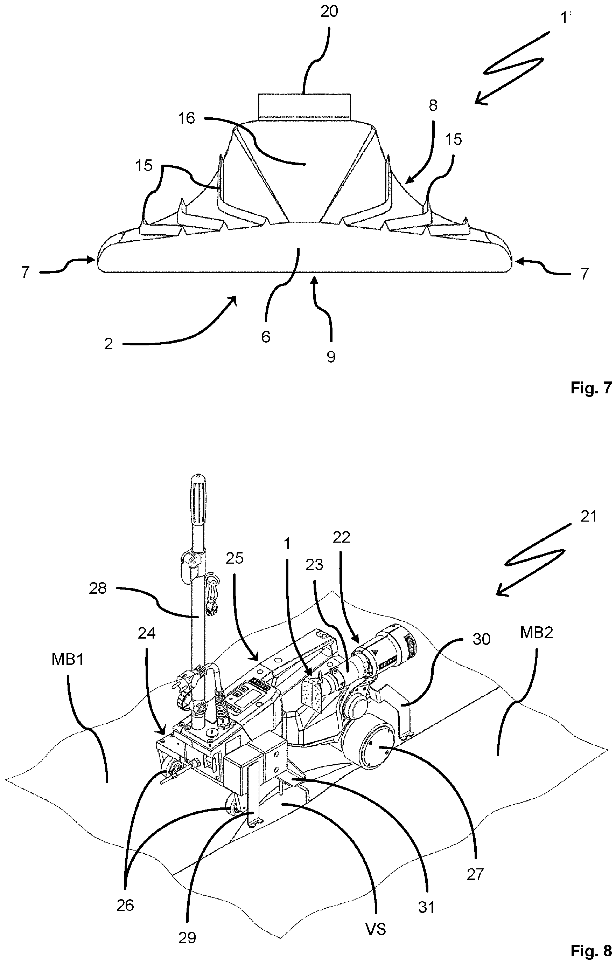

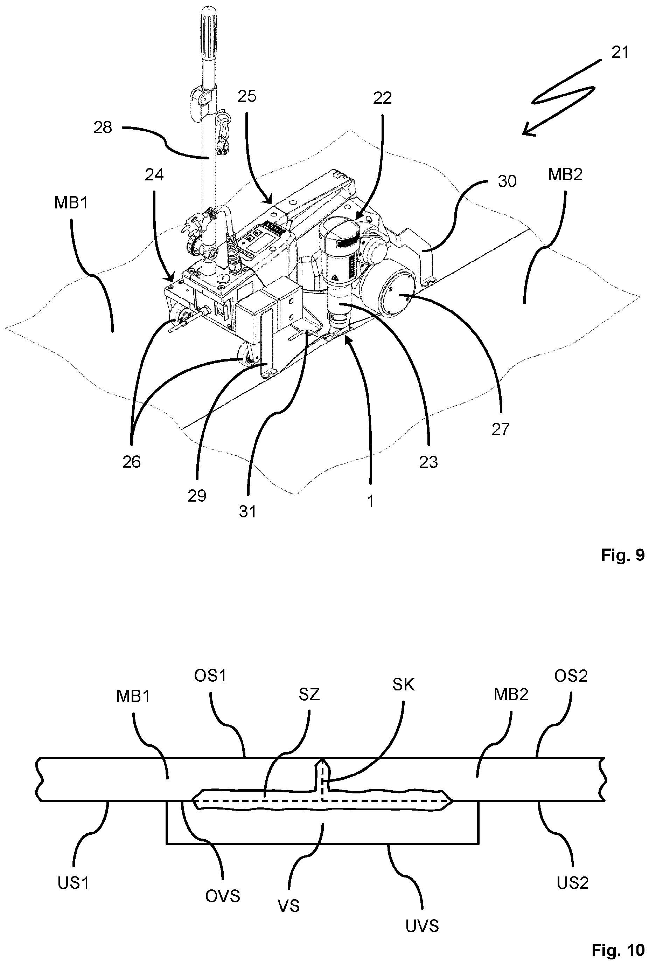

Aus der Oberflächenseite 8 steht in eine Richtung der zweiten Querachse 11 eine Finne 10 heraus. Die Finne 10 erstreckt sich in eine Richtung entlang der Längsachse 3 zwischen der Vorderkante 5 und der Hinterkante 6. Die Längserstreckung der Finne 10 ist dabei vorzugsweise kleiner als die maximale Längserstreckung des Basiskörpers 2 zwischen der Vorderkante 5 und der Hinterkante 6 parallel zur Längsachse 3. Die Längserstreckung der Finne 10 zwischen der Vorderkante 5 und der Hinterkante 6 endet mit einem Abstand vor der Hinterkante 6. Die Längserstreckung der Finne 10 zwischen der ersten Vorderkante 5 und der Hinterkante 6 beginnt an der der Vorderkante 5. Die Finne 10 ist wie der Basiskörper 2 ebenfalls hohl ausgebildet. Damit ist durch die Finne 10 Heißluft in die Basiskörper 2 einbringbar. An einem entlang der zweiten Querachse 11 von der Oberflächenseite 8 abgewandten Ende der Finne 10 geht die Finne 10 kontinuierlich in ein Schaftrohr 14 über. Ausgehend von der Finne 10 erstreckt sich das Schaftrohr 14 in eine Richtung entlang der zweiten Querachse 11. Das Schaftrohr 14 ermöglicht die Führung von Heißluft zur Finne 10 und durch die Finne 10 hindurch weiter in die Basiskörper 2 hinein. Des Weiteren ermöglicht das Schaftrohr 14 die Fixierung der gesamten Vorrichtung 1 an einem zum Austritt von Heißluft vorgesehenen endseitigen Bereichs eines heißlufterzeugenden Geräts 22, zum Beispiel im Bereich einer Austrittsöffnung für Heißluft eines Heißluftrohrs 23 des heißlufterzeugenden Geräts 22 (siehe dazu auch Fig. 8 und Fig. 9). Das Schaftrohr 14 kann zum Zweck der Fixierung an einem Heißluftrohr 23 oder dergleichen an einem von der Finne 10 entlang der zweiten Querachse 11 abgewandten axialen Ende ähnlich einer Rohrklemme ausgebildet sein.

An ein vorderes Ende der Längserstreckung der Finne 10 auf Seiten der Vorderkante 5 kann sich an die Finne 10 eine parallel zu der Längsachse 3 von der Finne 10 über die Vorderkante 5 hinaus abstehende Fahne 17 anschließen. Die optionale Fahne 17 dient als Anzeigevorrichtung zur Ausrichtung der Vorrichtung 1 bzw. eines fahrbaren Schweißapparats 21 (siehe auch Fig. 8 und Fig. 9) mit der Vorrichtung 1 bei der Vorbereitung der Verbindung von zwei Materialbahnen MB1, MB2 über ein Verbindungsstück VS in Richtung der einander zugewandten und aneinanderstoßenden Seitenflächen der Materialbahnen MB1 und MB2. Bei der Verbindung zweier Materialbahnen MB1 und MB2 über ein Verbindungsstück VS erleichtert die Fahne 17 die Führung der Vorrichtung 1 bzw. eines Schweißapparats 21 mit der Vorrichtung 1 als Ganzes entlang der einander zugewandten und aneinander anstoßenden Seitenflächen der Materialbahnen MB1 und MB2. Die Fahne 17 zeigt damit in eine bevorzugte Bewegungsrichtung der Vorrichtung 1 bzw. eines Schweißapparats 21 mit der Vorrichtung 1 als Ganzes.

Bei der Verbindung von zwei Materialbahnen MB1 und MB2 entlang ihrer einander zugewandten und aneinanderstoßenden Seitenflächen (Stoßkanten) über ein Verbindungsstück VS mit der Vorrichtung 1 ist die Unterflächenseite 9 des Basiskörpers 2 einer Oberseite OVS des Verbindungsstücks VS zugewandt und mit dieser zumindest teilweise in thermischem (und physischen) Kontakt. Die Oberflächenseite des Basiskörpers der Vorrichtung 1 ist dabei zugleich mit einer jeweiligen Unterseite US1, US2 der beiden Materialbahnen MB1, MB2 zumindest teilweise in thermischem (und physischem) Kontakt. Bei der in Form einer Heißluftdüse ausgebildeten Vorrichtung 1 entsprechend Fig. 2 bis Fig. 4 ist jedoch der direkte physische Kontakt begrenzt und für die unterseitige Erhitzung der Materialbahnen MB1, MB2 und der oberseitigen Erhitzung des Verbindungsstücks VS nicht entscheidend. Zwischen den beiden Materialbahnen MB1 und MB2 liegt dabei die Finne 10. Die Oberflächenseite 8 des Basiskörpers der Vorrichtung 1 wird durch die Finne 10 in zwei längsseitige Teiloberseiten geteilt, welche sich in einer Richtung entlang der ersten Querachse 4 über die Finne 10 beziehungsweise über eine von der Längsachse 3 und der zweiten Querachse 11 aufgespannten Ebene gegenüberliegen.

Die Hinterkante 6 kann als in zwei Teil-Hinterkanten (ohne eigene Bezugsziffern) geteilt angesehen werden, welche eine Austrittsöffnung 12 beranden und dabei zu den Längskanten 7 des Basiskörpers hin zusammenlaufen. Die Austrittsöffnung 12 an der Hinterkante 6 des Basiskörpers ermöglicht einen Austritt von Heißluft aus dem Basiskörper 2 in die Umgebung. Der Austritt von Heißluft aus dem Basiskörper 2 erfolgt dabei im Wesentlichen in eine Richtung parallel zur Längsachse 3 entgegen der Vorschubrichtung bzw. bevorzugten Bewegungsrichtung der Vorrichtung 1 bei einer Verbindung von zwei Materialbahnen MB1, MB2 über ein Verbindungsstück VS und damit zwischen die Oberseite OVS des Verbindungsstücks VS und den Unterseiten US1, US2 der beiden Materialbahnen MB1, MB2. Zusätzlich zu der Austrittsöffnung 12 an der Hinterkante 6 kann der Basiskörper 2 an der Oberflächenseite 8 und/oder an der Unterflächenseite 9 diverse weitere Austrittsöffnungen 13 zum Austritt von Heißluft aus dem Basiskörper 2 aufweisen. Die aus Austrittsöffnungen 13 in der Oberflächenseite 8 aus dem Basiskörper 2 austretende Heißluft tritt dabei zu der Unterseite UVS einer der Materialbahnen MB1, MB2 hin aus. Die aus Austrittsöffnungen 13 in der Unterflächenseite 9 austretende Heißluft tritt dabei zu der Oberseite OVS des Verbindungsstücks hin aus. Diese weiteren Austrittsöffnungen 13 dienen der Vorerhitzung von Verbindungsstück VS und Materialbahnen MB1, MB2. Die oberseitige Erhitzung des Verbindungsstücks VS und die unterseitige Erhitzung der Materialbahnen MB1, MB2 kann maßgeblich mittels aus der Austrittsöffnung 12 an der Hinterkante 6 des Basiskörpers 2 austretender Heißluft erfolgen. Ein Großteil einer in den Basiskörper 2 einbringbaren Heißluftmenge tritt gerade durch der Austrittsöffnung 12 an der Hinterkante 6 aus der Basiskörper 2 aus.

Auf der Oberflächenseite 8 des Basiskörpers 2 können optional beiderseits der Finne 10 jeweils 3 Leitprofile 15 ausgebildet sein. Die Leitprofile 15 erstrecken sich dabei von der Vorderkante 5 in Richtung der Hinterkante 6, optional bis zu der Hinterkante 6, über die Oberflächenseite 8. Im gezeigten Ausführungsbeispiel verlaufen die Leitprofile 15 ausgehend von der Vorderkante 5 zunächst parallel der Längsachse 3 über die Oberflächenseite 8 und schließlich in einem (spitzen) Winkel auf die Längsachse 3 zu, wobei sie vorher vor oder an der Hinterkante 6 des Basiskörpers 2 enden. Die Leitprofile 15 dienen der Zusammenführung von zwei beiderseits der Finne 10 an der Finne 10 vorbei über die Oberflächenseite 8 geführten Materialbahnen MB1, MB2 (nahe) an der Hinterkante 6, sodass die beiden Materialbahnen MB1, MB2 im Bereich der Hinterkante 6 mit ihren einander zugewandten Seitenflächen bzw. Stoßflächen wieder gegenseitig in Anlage gebracht werden. Die Leitprofile 15 haben bei der in den Fig. 2 bis Fig. 4 dargestellten beispielhaften Ausführungsform einen dreieckförmigen Querschnitt. Es sind jedoch auch andere Ausgestaltungen denkbar.

An einem Übergang zwischen der Oberflächenseite 8 und der aus der Oberflächenseite 8 herausstehenden Finne 10 kann als Teil der Oberflächenseite 8 ein um die Finne 10 umlaufender Absatz 16 ausgebildet sein. In dem gezeigten Ausführungsbeispiel liegt der Absatz 16 in einer Ebene, die die von der Längsachse 3 und der ersten Querachse 4 aufgespannten Ebene in einem spitzen Winkel schneidet und von der Vorderkante 5 des Basiskörpers 2 zu der Hinterkante 6 hinabfallend geneigt ist. Bei einem Schnitt durch den Basiskörper 2 senkrecht zu der Längsachse 3 weist die erste Trägerflächenseite beiderseits der Finne 10 ein jeweils von den Längskanten 7 bis zum Absatz 16 ansteigendes Querschnittsprofil auf. In einem vorderen Bereich des Basiskörpers 2 nahe der Vorderkante 5 kann das Querschnittsprofil konkav ausgeprägt und die Steigung unmittelbar am Übergang zum Absatz 16 am größten sein. Am Übergang zum Absatz 16, wobei das Querschnittsprofil im Bereich des Absatzes 16 jeweils parallel zu der ersten Querachse 4 verläuft, kann sich die Steigung des Querschnittsprofils sprunghaft ändern. Zu der Hinterkante 6 des Basiskörpers 2 hin kann die Ausprägung der Konkavität des Querschnittsprofils der der Oberflächenseite 8 beiderseits der Finne 10 zwischen den Längskanten 7 und dem Absatz 16 hin abnehmen und kann nahe der Hinterkante 6 in eine nur geringfügig beiderseits der Finne 10 zwischen den Längskanten 7 und dem Absatz 16 ansteigende gerade Linie übergehen. Im gezeigten Ausführungsbeispiel weist der Basiskörper 2 seine größte Dicke im Bereich des Absatzes 16 nahe der Vorderkante 5 auf. Die vorstehend beschriebene beispielhafte Ausgestaltung der Vorrichtung 1 ist den perspektivischen Darstellungen und der Rückansicht der Vorrichtung 1 in Fig. 4 eindeutig entnehmbar. Diese Ausgestaltung kann der Vermeidung eines ausgeprägten thermischen Kontakts zwischen den jeweiligen einander zugewandten Seitenflächen von zwei über die Oberflächenseite 8 des Basiskörpers 2 der Vorrichtung 1 geführten Materialbahnen MB1 und MB2 mit der Finne 10 dienen. Anderenfalls besteht die Gefahr einer Beschädigung der Materialbahnen MB1 und MB2 an ihren jeweiligen einander zugewandten Seitenflächen durch übermäßigen Eintrag von Wärmeenergie durch übermäßigen thermischen Kontakt mit der Finne 10. Insbesondere soll dabei eine für den optischen Eindruck einer aus den Oberseiten OS1 und OS2 der beide Materialbahnen MB1 und MB2 bei deren Verbindung resultierende Gesamtoberfläche der verbundenen Materialbahnen MB1 und MB2 nachteilige Beschädigung der oberen Seitenkanten der einander zugewandte Seitenflächen der Materialbahnen MB1 und MB2 vermieden werden. Ein begrenzter thermischer bzw. begrenzter direkter physischer Kontakt zwischen den einander zugewandten Seitenflächen der Materialbahnen MB1 und MB2 sowie der Finne 10 nahe der Hinterkante 6 des Basiskörpers 2, also in einer Umgebung des hinteren Endes der Erstreckung der Finne 10 entlang der Längsachse 3, ist allerdings möglich, ohne dass es zu einer übermäßigen thermischen Belastung käme.

Zusätzlich ist aus der Rückansicht der Vorrichtung 1 in der Fig. 4 ersichtlich, dass die Unterflächenseite 9 des Basiskörpers 2 der Vorrichtung 1 konkav ausgestaltet sein kann. Dadurch ergibt sich bei der Verbindung zweier Materialbahnen MB 1 und MB2 über ein Verbindungsstück VS mittels der Vorrichtung 1 ein Hohlraum zwischen der Unterflächenseite 9 des Basiskörpers 2 und der Oberseite OVS des Verbindungsstücks VS. Durch die Öffnungen 13 in der Unterflächenseite 9 des Basiskörpers 2 kann Heißluft aus dem Basiskörper 2 in den Hohlraum eingebracht werden. Der Hohlraum kann zur Hinterkante 6 des Basiskörpers 2 und/oder zur Vorderkante 5 der Vorrichtung 1 hin offen sein. Dies vermeidet einen Luftstau im Hohlraum, wodurch kontinuierlich Heißluft aus dem Basiskörper 2 in den Hohlraum eingebracht werden kann. Die Möglichkeit, kontinuierlichen Heißluft in einen Hohlraum zwischen der Unterflächenseite 9 des Basiskörpers 2 der Vorrichtung 1 und einer Oberseite OVS eines einbringen zu können, führt zu einer Verbesserung Vorerhitzung des Verbindungsstücks VS.

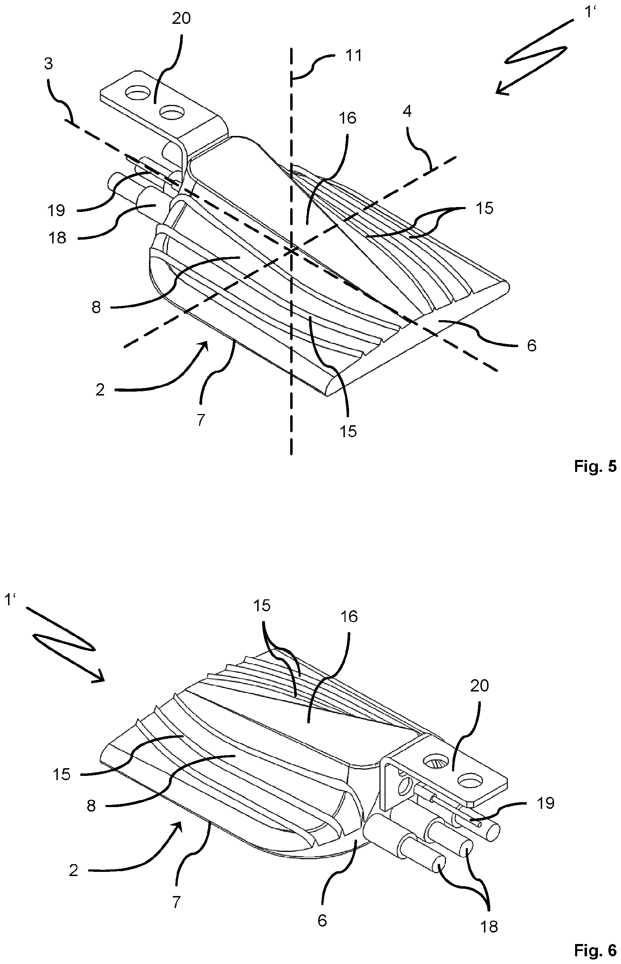

In den Fig. 5 bis Fig. 7 ist ein weiteres Ausführungsbeispiel einer erfindungsgemäßen Vorrichtung 1' eines fahrbaren Verbindungsapparats zur Verbindung von jeweils zwei Materialbahnen MB1 und MB2 über ein flächig liegendes Verbindungsstück VS gezeigt, nunmehr ausgebildet als Kontaktheizvorrichtung. Die Art der Darstellung der als Kontaktheizvorrichtung ausgebildeten Vorrichtung 1' gemäß den Fig. 5 bis Fig. 7 entspricht der Art der Darstellung der als Heißluftdüse ausgebildeten Vorrichtung 1 gemäß den Fig. 2 bis Fig. 4. Der Einfachheit halber wird die als Kontaktheizvorrichtung ausgebildete Vorrichtung 1' aus den Fig. 5 bis 7 im Folgenden primär anhand der Unterschiede zu der als Heißluftdüse ausgebildeten Vorrichtung 1 aus den Fig. 2 bis Fig. 4 beschrieben.

Der Basiskörper 2 der als Kontaktheizvorrichtung ausgebildeten Vorrichtung 1' kann als massiver, einstückiger Materialblock aus einem thermisch leitfähigen Material ausgebildet sein. Die Unterflächenseite 9 des Basiskörpers 2 der Vorrichtung 1'kann eben sein, abgesehen von einem jeweiligen begrenzten Übergangsbereich zu den Längskanten 7 des Basiskörpers 2 und der Vorderkante 5 des Basiskörpers 2. Dies dient der Maximierung thermischen Kontakts zwischen einer Oberseite OVS eines Verbindungsstücks VS und dem Basiskörper 2 der Vorrichtung 1' zur oberseitigen Erhitzung des Verbindungsstücks VS. Die Ausbildung der Oberflächenseite 8 des Basiskörpers 2 der Vorrichtung 1' kann grundsätzlich der Oberflächenseite 8 der Vorrichtung 1 entsprechen, inklusive identisch ausgebildeter Leitprofile 15 auf der Oberflächenseite 8. Die Vorrichtung 1'muss jedoch keine hohl ausgebildete Finne 10 und keine Austrittsöffnungen 12 oder 13 für Heißluft aufweisen.

Die Hinterkante 6 des Basiskörpers 2 der Vorrichtung 1`kann eben, geradlinig und länglich-flächig ausgebildet sein. Ausgehend von der Vorderkante 5 des Basiskörpers 2 der Vorrichtung 1' können sich eine oder mehrere Bohrungen, in gezeigten Ausführungsbeispiel insgesamt vier Bohrungen, parallel zu der Längsachse 3 in den Basiskörper hinein erstrecken. Drei der Bohrungen sind zur Aufnahme jeweils einer Heizpatrone 18 zur Beheizung des Basiskörpers 2 der Vorrichtung 1' vorgesehen. Die weitere, vierte Bohrung dient als Aufnahme für eine Thermosonde 19. Die vier Bohrungen sind in den Darstellungen der Vorrichtung 1' in den Fig. 5 bis Fig. 7 nicht sichtbar. In den Fig. 5 und Fig. 6 sind bereits aus den Bohrungen herausstehende Teile der drei Heizpatronen 18 und der Thermosonde 19 sichtbar. An der Vorderkante 5 des Basiskörpers 2 kann die Vorrichtung 1' zudem eine abgewinkelte Halterung 20 zur Verbindung der Vorrichtung 1' mit einem Schweißapparat oder dergleichen aufweisen.

In den Fig. 8 und Fig. 9 ist ein Ausführungsbeispiel eines fahrbaren Verbindungsapparats bzw. Schweißapparats 21 zum Verbinden von jeweils zwei Materialbahnen MB1 und MB2 über ein Verbindungsstück VS dargestellt. Zusätzlich zu dem Schweißapparat 21 selbst sind in den Fig. 8 und Fig. 9 auch zwei über ein Verbindungsstück VS zu verbindende Materialbahnen MB1 und MB2 dargestellt. In dem gezeigten Ausführungsbeispiel handelt es sich bei dem Verbindungsapparat um einen Heißluftschweißapparat mit einem Heißluftgerät (Heißluftgebläse) 22 zur Erzeugung eines Heißluftstroms. Das Heißluftgerät 22 ist gegenüber einem Tragrahmen 24 und einem Gehäuse 25 des Schweißapparats 21 drehbar/schwenkbar gelagert. Das Heißluftgerät 22 kann daher aus einer Ruheposition, wie in Fig. 8 dargestellt, in eine Betriebsposition, wie in Fig. 9 dargestellt, geschwenkt werden. Das Heißluftgerät 22 weist ein Heißluftrohr 23 auf, wobei an einem austrittseitigen Ende des Heißluftrohrs 23 bzw. des Heißluftgeräts 22 als Ganzes für von dem Heißluftgerät 22 erzeugte Heißluft eine Vorrichtung 1 zum Verbinden von jeweils zwei Materialbahnen MB1, MB2 über ein Verbindungsstück VS entsprechend der in den Figuren 2 bis 5 dargestellten Vorrichtung 1 angeordnet ist.

Der Schweißapparat 21 kann des Weiteren Fahrrollen 26, von denen in den Fig. 8 und Fig. 9 zwei sichtbar sind, eine Andruckrolle 27, welche, verbunden mit einem elektrischen Antrieb auch als Antriebsrolle dient, eine Materialbahnanhebevorrichtung 31, eine vordere Führungshilfe 29, eine hintere Führungshilfe 30 und einen Führungsstab 28 aufweisen. Die Führungshilfen 29, 30 erleichtern die Ausrichtung des Schweißapparats 21 entlang der jeweils einander zugewandten und aneinanderstoßenden Seitenflächen der Materialbahnen MB1 und MB2 in Vorbereitung einer Verbindung der Materialbahnen MB1 und MB2 mittels des Schweißapparats 21 und der Führung des Schweißapparats 21 entlang der Seitenflächen der Materialbahnen MB1 und MB2 bei der Verbindung der Materialbahnen MB1 und MB2. Dabei ist der Schweißapparat 21 von einem Bediener über den Führungsstab 28 führbar. Die vordere Führungshilfe 29 ist in dem Sinne vorne, als dass die vordere Führungshilfe 29 nahe an einem vorderen Ende des Schweißapparats 21 angeordnet ist. Das vordere Ende des Schweißapparats 21 ist dasjenige (längsseitige) Ende des Schweißapparats 21, welches in einer bevorzugten Bewegungsrichtung des Schweißapparats 21 bei dem Verbinden von Materialbahnen MB1 und MB2 in der bevorzugten Bewegungsrichtung vorne ist. Ein hinteres Ende des Schweißapparats 21 ist ein dem vorderen Ende gegenüberliegendes (längsseitiges) Ende des Schweißapparats 21. Dementsprechend ist die hintere Führungshilfe 30 nahe dem hinteren Ende des Schweißapparats 21 angeordnet. Die beiden Führungshilfen 29, 30 sind seitlich an einer Längsseite des Schweißapparats 21 angeordnet, wobei an dieser Längsseite auch das Heißluftgerät 22 an dem Schweißapparat 21 angeordnet ist.

In Fig. 8 ist der Schweißapparat in einer Stellung bei der Vorbereitung einer Verbindung der beiden Materialbahnen MB1, MB2 über das Verbindungsstück VS gezeigt. Das Heißluftgerät 22 mit der Vorrichtung 1 ist hochgeklappt in Ruhestellung. Mittels der optionalen Materialbahnanhebevorrichtung 31 sind die mit einer jeweiligen einander zugewandten Seitenfläche aneinander anstoßenden Materialbahnen MB1, MB2 lokal gespreizt, also randseitig lokal etwas von dem darunter liegenden Verbindungsstück VS angehoben und außer Anlage miteinander. Dies ermöglicht die Positionierung der Vorrichtung 1 mit ihrem Basiskörper 2 zwischen dem Verbindungsstück VS und den beiden Materialbahnen MB1, MB2 durch ein Herunterklappen des Heißluftgeräts 22 des Schweißapparats 21 mit der Vorrichtung 1 aus der Ruhestellung in die Arbeitsstellung.

In Fig. 9 ist das Heißluftgerät 22 in der Arbeitsstellung gezeigt, wohingegen die Materialbahnanhebevorrichtung 31 hochgeklappt in einer Ruhestellung ist, also nicht (mehr) lokal zwischen die beiden Materialbahnen MB1, MB2 greift und diese aufspreizt. Die Materialbahnanhebevorrichtung 31 kann automatisch hochgeklappt werden, wenn der Schweißapparat 21 in eine Bewegung versetzt wird bzw. losfährt. Die Vorrichtung 1 des Heißluftgeräts 22 des Schweißapparats 21 ist in Arbeitsstellung mit ihrem Basiskörper 2 zwischen den Materialbahnen MB1, MB2 und dem Verbindungsstück VS positioniert. Ausgehend von der in Fig. 9 gezeigten Stellung wird das Heißluftgerät 22 des Schweißapparats 21 in Betrieb gesetzt und der Schweißapparat 21 entlang der einander zugewandten und aneinander anstoßenden Seitenflächen der Materialbahnen MB1, MB2 in Bewegung gesetzt. Dabei werden simultan die Materialbahnen MB1, MB2 sukzessive bereichsweise unterseitig und das Verbindungsstück VS sukzessive bereichsweise oberseitig mittels Beaufschlagung durch mit dem Heißluftgerät 22 erzeugter Heißluft via der als Heißluftdüse ausgebildeten Vorrichtung 1 erhitzt. Im unmittelbaren Nachgang der Erhitzung kann mittels der Andruckrolle 27 von den Oberseiten OS1, OS2 der Materialbahnen MB1, MB2 her auf erhitzte Bereiche der Materialbahnen MB1, MB2 und des Verbindungstücks VS sukzessive Druck ausgeübt werden, um die Materiabahnen MB1, MB2 und das Verbindungsstück zusammenzufügen. Die Verbindung der Materialbahnen MB1, MB1 über das Verbindungsstück erfolgt vorteilhaft in einem Zug. Weitere Arbeiten und/oder Arbeitsschritte sind nicht notwendigerweise erforderlich.

In Fig. 10 ist, basierend auf der Fig. 1 als Darstellung der Ausgangssituation, das Ergebnis einer Verbindung jeweils zweier Materialbahnen MB1 und MB2 über ein Verbindungsstück VS schematisch dargestellt. Zwischen einer jeder der beiden Materialbahnen MB1, MB2 und dem Verbindungsstück, VS sowie zwischen den beiden Materialbahnen MB1, MB2 sind parallele Schweißnähte ausgebildet, welche vorzugsweise eine gemeinsame Schweißnaht SN bilden. Im gezeigten Ausführungsbeispiel ist die Schweißnaht SN erkaltetes aufgeschmolzenes Material der beiden Materialbahnen MB1, MB2 und des Verbindungsstücks VS.

Zusammenfassend kann mit den hierin vorgeschlagenen Lösungen eine weiter verbesserte Vorrichtung zum thermischen Verbinden einer ersten Materialbahn und einer zweiten Materialbahn mit einem Verbindungsstück und ferner für eine Stoßverbindung zwischen der ersten Materialbahn und der zweiten Materialbahn bereitgestellt werden. Mit der vorgeschlagenen Lösung kann die Arbeitsgeschwindigkeit erhöht werden. Insbesondere ermöglicht es die vorgeschlagene Lösung, die Verbindungen in einem einzigen Arbeitsgang herzustellen.

## Patentansprüche

1. Fahrbarer Verbindungsapparat, insbesondere fahrbarer Schweißapparat (21), zum thermischen Verbinden von jeweils zwei Materialbahnen (MB1, MB2) über ein flächig auf einer Unterseite (UVS) liegendes, bahnförmiges Verbindungsstück (VS), wobei die Materialbahnen (MB1, MB2) mit jeweils einer einander zugewandten Seitenfläche aneinanderstoßend zumindest teilweise mit einer Unterseite (US1, US2) auf einer Oberseite (OVS) des Verbindungsstücks (VS) flächig aufliegend angeordnet sind,
wobei der Schweißapparat (21) zumindest einen Tragrahmen (24) und ein aus jeweils wenigstens eine an dem Tragrahmen (24) angeordneten Andruckrolle (27) und Fahrrolle (26) gebildetes Fahrgestell aufweist,
wobei bezogen auf eine Vorschubrichtung des Schweißapparats (21) entlang der Seitenflächen der Materialbahnen (MB1, MB2) bei der Verbindung der Materialbahnen (MB1, MB2) die Fahrrolle (26) am Tragrahmen (24) in einem vorderen Bereich des Tragrahmens (24) und die Andruckrolle (27) in einem hinteren Bereich des Tragrahmens (24) angeordnet ist,
ferner aufweisend eine Vorrichtung (1, 1') zum thermischen Verbinden von jeweils zwei Materialbahnen (MB1, MB2) über ein flächig auf einer Unterseite (UVS) liegendes, bahnförmiges Verbindungsstück (VS), wobei die Materialbahnen (MB1, MB2) mit jeweils einer einander zugewandten Seitenfläche aneinanderstoßend zumindest teilweise mit einer jeweiligen Unterseite (US1, US2) auf einer Oberseite (OVS) des Verbindungsstücks (VS) flächig aufliegend angeordnet sind,
wobei die Vorrichtung (1, 1') einen Basiskörper (2) mit einer Vorderkante (5), einer der Vorderkante (5) gegenüberliegenden Hinterkante (6) und zwei sich gegenüberliegende Längskanten (7) aufweist,
wobei sich eine Oberflächenseite (8) und eine der Oberflächenseite (8) gegenüberliegende Unterflächenseite (9) des Basiskörpers (2) jeweils sowohl zwischen der Vorderkante (5) und der Hinterkante (6) als auch zwischen den beiden Längskanten (7) erstrecken,
wobei die Oberflächenseite (8), die Unterflächenseite (9), die Vorderkante (5), die Hinterkante (6) und die beiden Längskanten (7) ein Volumen des Basiskörpers (2) vollständig beranden,
wobei die Vorrichtung mit dem Basiskörper (2) unter Hinwendung der Oberflächenseite (8) zu den Unterseiten (US1, US2) der Materialbahnen (MB1, MB2) und der Unterflächenseite (9) zu der Oberseite (OVS) des Verbindungsstücks (VS) zwischen der Oberseite (OVS) des Verbindungsstücks (VS) und den Unterseiten (US1, US2) der Materialbahnen (MB1, MB2) hindurchführbar ausgebildet ist,
wobei der Basiskörper (2) dazu ausgebildet ist, die Materialbahnen (MB1, MB2) zumindest in an ihre Seitenflächen angrenzenden Bereichen ihrer jeweiligen Unterseite (US1, US2) von der Vorderkante (5) zu der Hinterkante (6) derart über die Oberflächenseite (8) zu führen, dass die Materialbahnen (MB1, MB2) ausgehend von der Vorderkante (5) zumindest über ein Viertel, insbesondere zumindest über eine Hälfte, insbesondere zumindest über Zweidrittel einer maximalen Erstreckung des Basiskörpers (2) zwischen der Vorderkante (5) und der Hinterkante (6) mit ihrer jeweils einander zugewandten Seitenfläche voneinander beabstandet geführt sind, und
wobei die Vorrichtung (1, 1') dazu ausgebildet ist, simultan jeweils zumindest teilweise die Unterseite (US1, US2) der Materialbahnen (MB1, MB2), die Oberseite des Verbindungsstückes (OVS) und die jeweils einander zugewandte Seitenfläche der Materialbahnen (MB1, MB2) derart zu erhitzen, dass jeweils zwischen jeder der beiden Materialbahnen (MB1, MB2) und dem Verbindungsstück (VS) sowie zwischen den Materialbahnen (MB1, MB2) zueinander parallele Verbindungen, insbesondere parallele Schweißnähte herstellbar sind.

2. Fahrbarer Verbindungsapparat nach Anspruch 1, wobei der Basiskörper (2) als Hohlkörper ausgebildet ist und zumindest eine Öffnung (12) zum Austritt von Heißluft aus dem Hohlkörper an der Hinterkante (6) des Basiskörpers (2) in einen Hohlraum zwischen der Hinterkante (6) des Basiskörpers (2), der Oberseite (OVS) des Verbindungsstücks (VS) und den Unterseiten (US1, US2) der Materialbahnen (MB1, MB2) aufweist.

3. Fahrbarer Verbindungsapparat nach Anspruch 2, wobei die Oberflächenseite (8) und/oder die Unterflächenseite (9) zumindest eine Öffnung (13) zum Austritt von Heißluft aus dem Basiskörper (2) aufweist.

4. Fahrbarer Verbindungsapparat nach einem der Ansprüche 2 oder 3, wobei aus der Oberflächenseite (8) des Basiskörpers (2) eine Finne (10) heraussteht,
wobei sich die Finne (10) parallel zu der maximalen Erstreckung des Basiskörpers (2) zumindest teilweise zwischen der Vorderkante (5) und der Hinterkante (6) erstreckt, und
wobei von einem von der Oberflächenseite (8) abgewandten Ende der Finne (10) her Heißluft durch die Finne (10) hindurch in den Basiskörper (2) einbringbar ist.

5. Fahrbarer Verbindungsapparat nach Anspruch 4, **dadurch gekennzeichnet, dass** die Oberflächenseite (8) des Basiskörpers (2) dazu ausgebildet ist, die Materialbahnen (MB1, MB2) derart an der Finne (10) vorbeizuführen, dass ein thermischer Kontakt zu einer Seitenkante einer Materialbahn (MB1, MB2) an einem Übergang zwischen der jeweiligen Unterseite zu der jeweiligen Seitenfläche der Materialbahnen (MB1, MB2) entlang einer Erstreckung der Finne (10) zwischen der Vorderkante (5) und der Hinterkante (6) nur auf einer zweiten Hälfte, insbesondere nur auf einem letzten Drittel und insbesondere nur auf einem letzten Viertel einer Erstreckung der Finne (10) zwischen der Vorderkante (5) und der Hinterkante (6) des Basiskörpers (2) erfolgt.

6. Fahrbarer Verbindungsapparat nach einem der Ansprüche 4 oder 5, wobei sich an das Ende der Finne (10) ein Schaftrohr (14) anschließt, welches zur Führung eines Luftstroms zum Ende der Finne (10) und zugleich zur Fixierung an einem Heißluftgerät (22) in einem zum Austritt des von einem Heißluftgerät (22) erzeugbaren Heißluftstroms vorgesehenen Bereich des Heißluftgeräts (22) ausgebildet ist.

7. Fahrbarer Verbindungsapparat nach einem der vorhergehenden Ansprüche, wobei die Unterflächenseite (9) des Basiskörpers (2) konkav ausgestaltet ist.

8. Fahrbarer Verbindungsapparat nach einem der vorhergehenden Ansprüche, wobei die Vorrichtung (1, 1') als elektrisch beheizbare Kontaktheizvorrichtung (1') ausgebildet ist.

9. Fahrbarer Verbindungsapparat nach Anspruch 8, wobei die Vorrichtung (1') zumindest teilweise aus einem direkt elektrisch bestrombaren Heizblech oder die Vorrichtung (1') zumindest teilweise als massiver Materialblock aus einem thermisch leitfähigen Material mit zumindest einer Aufnahme für wenigstens ein elektrisches Heizelement (18) ausgebildet ist.

10. Fahrbarer Verbindungsapparat nach einem der vorhergehenden Ansprüche, wobei von der Oberflächenseite (8) des Basiskörpers (2) wenigstens zwei Leitprofile (15) nach außen abstehen,
wobei sich die Leitprofile (15) zumindest teilweise zwischen der Vorderkante (5) und der Hinterkante (6) über die erste Oberflächenseite (8) erstrecken, und
wobei die Leitprofile (15) dazu ausgebildet sind, die Materialbahnen (MB1, MB2) für wenigstens ein Viertel, insbesondere wenigstens eine Hälfte, insbesondere wenigstens Zweidrittel der maximalen Erstreckung des Basiskörpers (2) zwischen der Vorderkante (5) und der Hinterkante (6) mit ihrer jeweiligen Seitenfläche voneinander beabstandet über die Oberflächenseite (8) zu führen und die Materialbahnen (MB1, MB2) auf die Hinterkante (6) zulaufend mit den Seitenflächen aneinander stoßend in Anlage zu bringen.

11. Fahrbarer Verbindungsapparat nach einem der vorhergehenden Ansprüche, wobei die Vorrichtung (1, 1') gegenüber dem Fahrgestell höhenverstellbar ausgebildet ist.

12. Fahrbarer Verbindungsapparat nach einem der vorhergehenden Ansprüche, wobei der Verbindungsapparat (21) zumindest eine in der Vorschubrichtung des Verbindungsapparats (21) vor und/oder nach der Vorrichtung (1, 1') angeordnete Führungshilfe (29, 30) zur optischen Anzeige der Lage der einander zugewandten und aneinanderstoßenden Seitenflächen der Materialbahnen (MB1, MB2) aufweist.

13. Verfahren zum Verbinden von jeweils zwei Materialbahnen (MB1, MB2) über ein bahnförmiges Verbindungsstück (VS), mit den Schritten:
a. Bereitstellen eines flächig auf einer Unterseite (UVS) liegenden Verbindungsstücks (VS) und zweier über das Verbindungsstück (VS) zu verbindender Materialbahnen (MB1, MB2), welche mit jeweils einer einander zugewandten Seitenkante aneinanderstoßend jeweils zumindest teilweise mit einer Unterseite (US1, US2) auf einer Oberseite (OVS) des Verbindungsstücks (VS) flächig aufliegend angeordnet sind;
b. Zumindest teilweises Erhitzen der jeweiligen Unterseiten (US1, US2) der Materialbahnen (MB1, MB2), der Seitenkanten der Materialbahnen und der Oberseite (OVS) des Verbindungsstücks (VS) in einem Verbindungsbereich derart, dass sich im Verbindungsbereich (VS) zwischen jeder der Materialbahnen (MB1, MB2) und dem Verbindungsstück (VS) sowie zwischen den Materialbahnen (MB1, MB2) zugleich zueinander parallele Zonen angeschmolzenen und/oder aufgeschmolzenen Materials der Materialbahnen (MB1, MB2) sowie angeschmolzenen und/oder aufgeschmolzenen Materials des Verbindungsstücks (VS) ausbilden, die vorzugsweise abstandslos ineinander übergehen;
c. Applikation von Druck im Verbindungsbereich auf die Materialbahnen (MB1, MB2) von deren Oberseiten (OS1, OS2) her im unmittelbaren Nachgang des Erhitzens zur simultanen Ausbildung von jeweils einer Verbindung zwischen jeder der Materialbahnen (MB1, MB2) und dem Verbindungsstück (VS) sowie einer weiteren Verbindung zwischen den Materialbahnen (MB1, MB2) bei Erkalten des in den Zonen durch Erhitzung angeschmolzenen und/oder aufgeschmolzenen Materials der Materialbahnen (MB1, MB2) und des angeschmolzenen und/oder aufgeschmolzenen Materials des Verbindungsstücks (VS), wobei sich die Verbindungen parallel zueinander erstrecken.

14. Verfahren nach Anspruch 13, wobei das Erhitzen der Unterseite (US1, US2) der Materialbahnen (MB1, MB2), der Seitenkanten der Materialbahnen und der Oberseite (OVS) des Verbindungsstücks (VS) im Verbindungsbereich mittels eines fahrbaren Verbindungsapparats nach einem der Ansprüche 1 bis 12 erfolgt.

## Claims

1. Movable joining apparatus, in particular movable welding apparatus (21), for thermal joining of respective two material sheets (MB1, MB2) over a strip-shaped connecting piece (VS) lying areally on a bottom side (UVS), wherein the material sheets (MB1, MB2) are arranged with a respective side surface facing one another abutting against each another at least partially with a bottom side (US1, US2) lying areally on a top side (OVS) of the connecting piece (VS),
wherein the welding apparatus (21) comprises at least a support frame (24) and a chassis formed by at least one pressure roller (27) and one traveling roller (26) arranged on the support frame (24),
wherein the traveling roller (26) is arranged on the support frame (24) in a front region of the support frame (24) and the pressure roller (27) is arranged in a rear region of the support frame (24) with respect to a travel direction of the joining apparatus (21) along the side surfaces of the material sheets (MB1, MB2) upon joining the material sheets (MB1, MB2),
further comprising a device (1, 1') for thermal joining of respective two material sheets (MB1, MB2) over a strip-shaped connecting piece (VS) lying areally on a bottom side (UVS), wherein the material sheets (MB1, MB2) are arranged with a respective side surface facing one another abutting against each other at least partially with a respective bottom side (US1, US2) lying areally on a top side (OVS) of the connecting piece (VS),
wherein the device (1, 1') comprises a base body (2) with a front edge (5), a rear edge (6) opposite the front edge (5) and two opposite longitudinal edges (7),
wherein a top surface side (8) and a bottom surface side (9) opposite the top surface side (8) of the base body (2) respectively extend between the front edge (5) and the rear edge (6) as well as between the two longitudinal edges (7),
wherein the top surface side (8), the bottom surface side (9), the front edge (5), the rear edge (6) and the two longitudinal edges (7) entirely border a volume of the base body (2),
wherein the device with the base body (2) is configured to be guided between the top side (OVS) of the connecting piece (VS) and the bottom sides (US1, US2) of the material sheets (MB1, MB2) with the top surface side (8) facing towards the bottom sides (US1, US2) of the material sheets (MB1, MB2) and the bottom surface side (9) facing towards the top side (OVS) of the connecting piece (VS),
wherein the base body (2) is configured to guide the material sheets (MB1, MB2) at least in areas of their respective bottom sides (US1, US2) adjacent to their side surfaces from the front edge (5) to the rear edge (6) over the top surface side (8) such that the material sheets (MB1, MB2) are guided starting from the front edge (5) at least over a quarter, in particular at least over a half, in particular at least over two-thirds of a maximum extension of the base body (2) between the front edge (5) and the rear edge (6) with their respective side surfaces facing one another separated from one another, and
wherein the device (1, 1') is configured to simultaneously heat at least partially the bottom side (US1, US2) of the material sheets (MB1, MB2), the top side of the connecting piece (OVS) and the respective side surface of the material sheets (MB1, MB2) facing one another so as to produce respectively between each of the two material sheets (MB1, MB2) and the connecting piece (VS) as well as between the material sheets (MB1, MB2) parallel connections, in particular parallel weld seams.

2. Movable joining apparatus according to claim 1, wherein the base body (2) is configured as a hollow body and comprises at least one opening (12) for outlet of hot air from the hollow body at the rear edge (6) of the base body (2) into a space between the rear edge (6) of the base body (2), the top side (OVS) of the connecting piece (VS) and the bottom sides (US1, US2) of the material sheets (MB1, MB2).

3. Movable joining apparatus according to claim 2, wherein the top surface side (8) and/or the bottom surface side (9) comprises at least one opening (13) for outlet of hot air from the base body (2).

4. Movable joining apparatus according to claim 2 or 3, wherein a fin (10) protrudes from the top surface side (8) of the base body (2),
wherein the fin (10) extends parallel to the maximum extension of the base body (2) at least partially between the front edge (5) and the rear edge (6), and
wherein hot air can be introduced into the base body (2) through the fin (10) from an end of the fin (10) facing away from the top surface side (8).

5. Movable joining apparatus according to claim 4, **characterized in that** the top surface side (8) of the base body (2) is configured to guide the material sheets (MB1, MB2) past the fin (10) such that thermal contact with a side edge of a material sheet (MB1, MB2) at a transition between the respective bottom side to the respective side surface of the material sheets (MB1, MB2) along an extension of the fin (10) between the front edge (5) and the rear edge (6) is established only on a second half, in particular only on a last third and in particular only on a last quarter of an extension of the fin (10) between the front edge (5) and the rear edge (6) of the base body (2).

6. Movable joining apparatus according to claim 4 or 5, wherein a shaft tube (14) is connected to the end of the fin (10), which is configured for guiding an air flow to the end of the fin (10) and at the same time for fixing to a hot air device (22) in a region of the hot air device (22) for the outlet of the hot air flow to be generated by the hot air device (22).

7. Movable joining apparatus according to any of the preceding claims, wherein the bottom surface side (9) of the base body (2) is concave.

8. Movable joining apparatus according to any of the preceding claims, wherein the device (1, 1') is configured as an electrically heated contact heating device (1').

9. Movable joining apparatus according to claim 8, wherein the device (1') is at least partially configured as a directly electrically heated heating plate or the device (1') is at least partially configured as a solid block of material made of a thermally conductive material comprising at least one receptacle for at least one electrical heating element (18).

10. Movable joining apparatus according to any of the preceding claims, wherein at least two guiding profiles (15) protrude outwards from the top surface side (8) of the base body (2),
wherein the guiding profiles (15) extend at least partially between the front edge (5) and the rear edge (6) over the first top surface side (8), and
wherein the guiding profiles (15) are configured to guide the material sheets (MB1, MB2) for at least a quarter, in particular at least a half, in particular at least two-thirds of the maximum extension of the base body (2) between the front edge (5) and the rear edge (6) with their respective side surfaces separated from one another over the top surface side (8) and to bring the material sheets (MB1, MB2) towards the rear edge (6) into contact with the side surfaces abutting against each other.

11. Movable joining apparatus according to any of the preceding claims, wherein the device (1, 1') is configured to be adjustable in height relative to the chassis.

12. Movable joining apparatus according to any of the preceding claims, wherein the joining apparatus (21) comprises at least one guide aid (29, 30) arranged in front and/or behind the device (1, 1') in the travel direction of the joining apparatus (21) for visually indicating the position of the side surfaces of the material sheets (MB1, MB2) facing one another and abutting against each other.

13. Method for joining of respective two material sheets (MB1, MB2) over a strip-shaped connecting piece (VS), comprising the steps:
a. providing a connecting piece (VS) lying areally on a bottom side (UVS) and two material sheets (MB1, MB2) to be joined over the connecting piece (VS), which are arranged with a respective side surface facing one another abutting against each other at least partially with a respective bottom side (US1, US2) lying areally on a top side (OVS) of the connecting piece (VS);
b. at least partial heating of the respective bottom sides (US1, US2) of the material sheets (MB1, MB2), the side surfaces of the material sheets and the top side (OVS) of the connecting piece (VS) in a connecting region such that in the connecting region (VS) between each of the material sheets (MB1, MB2) and the connecting piece (VS) as well as between the material sheets (MB1, MB2) simultaneously zones of partially melted and/or melted material of the material sheets (MB1, MB2) and of partially melted and/or melted material of the connecting piece (VS) parallel to one another are formed in the connecting region (VS), in particular which merge into one another without a gap;
c. applying pressure in the connecting region to the material sheets (MB1, MB2) from their top sides (OS1, OS2) immediately after the heating to simultaneously form a connection between each of the material sheets (MB1, MB2) and the connecting piece (VS) as well as a further connection between the material sheets (MB1, MB2) upon cooling of the by heating partially melted and/or melted material of the material sheets (MB1, MB2) and the partially melted and/or melted material of the connecting piece (VS) in the zones, wherein the connections extend parallel to one another.

14. Method according to claim 13, wherein the heating of the bottom side (US1, US2) of the material sheets (MB1, MB2), the side surfaces of the material sheets and the top side (OVS) of the connecting piece (VS) in the connecting region is carried out by a movable joining apparatus according to any of claims 1 to 12.

## Revendications

1. Appareil de liaison mobile, en particulier appareil de soudage (21) mobile, pour la liaison thermique de respectivement deux bandes de matériau (MB1, MB2) par l'intermédiaire d'une pièce de liaison (VS) en forme de bande reposant à plat sur une face inférieure (UVS), dans lequel les bandes de matériau (MB1, MB2) sont disposées en butée l'une contre l'autre avec respectivement une surface latérale tournée l'une vers l'autre et en reposant à plat au moins partiellement avec une face inférieure (US1, US2) sur une face supérieure (OVS) de la pièce de liaison (VS),
dans lequel l'appareil de soudage (21) présente au moins un cadre de support (24) et un châssis formé par respectivement au moins un galet de pression (27) et un galet de déplacement (26) disposés sur le cadre de support (24),
dans lequel, par rapport à une direction d'avance de l'appareil de soudage (21) le long des surfaces latérales des bandes de matériau (MB1, MB2) lors de la liaison des bandes de matériau (MB1, MB2), le galet de déplacement (26) est disposé sur le cadre de support (24) dans une zone avant du cadre de support (24) et le galet de pression (27) est disposé dans une zone arrière du cadre de support (24),
présentant en outre un dispositif (1, 1') pour la liaison thermique de respectivement deux bandes de matériau (MB1, MB2) par l'intermédiaire d'une pièce de liaison (VS) en forme de bande reposant à plat sur une face inférieure (UVS), dans lequel les bandes de matériau (MB1, MB2) sont disposées en butée l'une contre l'autre avec respectivement une surface latérale tournée l'une vers l'autre et en reposant à plat au moins partiellement avec une face inférieure (US1, US2) respective sur une face supérieure (OVS) de la pièce de liaison (VS),
dans lequel le dispositif (1, 1') présente un corps de base (2) comportant un bord avant (5), un bord arrière (6) opposé au bord avant (5) et deux bords longitudinaux (7) se faisant face,
dans lequel une face de surface supérieure (8) et une face de surface inférieure (9), opposée à la face de surface supérieure (8), du corps de base (2) s'étendent respectivement aussi bien entre le bord avant (5) et le bord arrière (6) qu'entre les deux bords longitudinaux (7),
dans lequel la face de surface supérieure (8), la face de surface inférieure (9), le bord avant (5), le bord arrière (6) et les deux bords longitudinaux (7) bordent complètement un volume du corps de base (2),
dans lequel le dispositif comportant le corps de base (2) est conçu de manière à pouvoir être passé entre la face supérieure (OVS) de la pièce de liaison (VS) et les faces inférieures (US1, US2) des bandes de matériau (MB1, MB2) en orientant la face de surface supérieure (8) vers les faces inférieures (US1, US2) des bandes de matériau (MB1, MB2) et la face de surface inférieure (9) vers la face supérieure (OVS) de la pièce de liaison (VS),
dans lequel le corps de base (2) est conçu pour guider les bandes de matériau (MB1, MB2), au moins dans des zones de leur face inférieure (US1, US2) respective adjacentes à leurs surfaces latérales, depuis le bord avant (5) jusqu'au bord arrière (6), sur la face de surface supérieure (8), de telle sorte que les bandes de matériau (MB1, MB2) sont guidées à distance l'une de l'autre à partir du bord avant (5) au moins sur un quart, en particulier au moins sur une moitié, en particulier au moins sur deux tiers d'une extension maximale du corps de base (2) entre le bord avant (5) et le bord arrière (6), avec leurs surfaces latérales respectivement tournées l'une vers l'autre, et
dans lequel le dispositif (1, 1') est conçu pour chauffer simultanément respectivement au moins partiellement la face inférieure (US1, US2) des bandes de matériau (MB1, MB2), la face supérieure de la pièce de liaison (OVS) et les surfaces latérales respectivement tournées l'une vers l'autre des bandes de matériau (MB1, MB2), de telle sorte que des liaisons parallèles entre elles, en particulier des soudures parallèles, peuvent être réalisées respectivement entre chacune des deux bandes de matériau (MB1, MB2) et la pièce de liaison (VS) ainsi qu'entre les bandes de matériau (MB1, MB2).

2. Appareil de liaison mobile selon la revendication 1, dans lequel le corps de base (2) est conçu sous forme de corps creux et présente au moins une ouverture (12) pour la sortie d'air chaud hors du corps creux au niveau du bord arrière (6) du corps de base (2) dans un espace creux entre le bord arrière (6) du corps de base (2), la face supérieure (OVS) de la pièce de liaison (VS) et les faces inférieures (US1, US2) des bandes de matériau (MB1, MB2).

3. Appareil de liaison mobile selon la revendication 2, dans lequel la face de surface supérieure (8) et/ou la face de surface inférieure (9) présentent au moins une ouverture (13) pour la sortie d'air chaud hors du corps de base (2).

4. Appareil de liaison mobile selon l'une des revendications 2 ou 3, dans lequel un aileron (10) fait saillie depuis la face de surface supérieure (8) du corps de base (2),
dans lequel l'aileron (10) s'étend parallèlement à l'extension maximale du corps de base (2) au moins partiellement entre le bord avant (5) et le bord arrière (6), et
dans lequel de l'air chaud peut être introduit dans le corps de base (2) à travers l'aileron (10) à partir d'une extrémité de l'aileron (10) opposée à la face de surface supérieure (8).

5. Appareil de liaison mobile selon la revendication 4, **caractérisé en ce que** la face de surface supérieure (8) du corps de base (2) est conçue pour faire passer les bandes de matériau (MB1, MB2) devant l'aileron (10) de telle sorte qu'un contact thermique avec un bord latéral d'une bande de matériau (MB1, MB2) au niveau d'une transition entre la face inférieure respective et la surface latérale respective des bandes de matériau (MB1, MB2) le long d'une extension de l'aileron (10) entre le bord avant (5) et le bord arrière (6) ne se produit que sur une seconde moitié, en particulier que sur un dernier tiers et en particulier que sur un dernier quart d'une extension de l'aileron (10) entre le bord avant (5) et le bord arrière (6) du corps de base (2).

6. Appareil de liaison mobile selon l'une des revendications 4 ou 5, dans lequel l'extrémité de l'aileron (10) est suivie d'un tube de tige (14) qui est conçu pour guider un flux d'air vers l'extrémité de l'aileron (10) et en même temps pour être fixé à un appareil à air chaud (22) dans une zone de l'appareil à air chaud (22) prévue pour la sortie du flux d'air chaud pouvant être généré par un appareil à air chaud (22).

7. Appareil de liaison mobile selon l'une des revendications précédentes, dans lequel la face de surface inférieure (9) du corps de base (2) est de forme concave.

8. Appareil de liaison mobile selon l'une des revendications précédentes, dans lequel le dispositif (1, 1') est conçu comme un dispositif de chauffage par contact (1') pouvant être chauffé électriquement.

9. Appareil de liaison mobile selon la revendication 8, dans lequel le dispositif (1') est conçu au moins partiellement à partir d'une tôle chauffante pouvant être alimentée directement en courant électrique ou le dispositif (1') est conçu au moins partiellement sous forme de bloc de matériau massif en un matériau thermiquement conducteur comportant au moins un logement pour au moins un élément chauffant électrique (18).

10. Appareil de liaison mobile selon l'une des revendications précédentes, dans lequel au moins deux profilés de conduite (15) font saillie vers l'extérieur depuis la face de surface supérieure (8) du corps de base (2),
dans lequel les profilés de conduite (15) s'étendent au moins partiellement entre le bord avant (5) et le bord arrière (6) sur la première face de surface supérieure (8), et
dans lequel les profilés de conduite (15) sont conçus pour guider les bandes de matériau (MB1, MB2) avec leur surface latérale respective à distance l'une de l'autre sur la face de surface supérieure (8) pour au moins un quart, en particulier au moins une moitié, en particulier au moins deux tiers de l'extension maximale du corps de base (2) entre le bord avant (5) et le bord arrière (6) et pour amener les bandes de matériau (MB1, MB2) en contact par butée l'une contre l'autre avec les surfaces latérales en se rapprochant du bord arrière (6).

11. Appareil de liaison mobile selon l'une des revendications précédentes, dans lequel le dispositif (1, 1') est conçu de manière à être réglable en hauteur par rapport au châssis.

12. Appareil de liaison mobile selon l'une des revendications précédentes, dans lequel l'appareil de liaison (21) présente au moins un moyen auxiliaire de guidage (29, 30) disposé, dans la direction d'avance de l'appareil de liaison (21), en amont et/ou en aval du dispositif (1, 1') et permettant l'indication optique de la position des surfaces latérales des bandes de matériau (MB1, MB2) tournées l'une vers l'autre et en butée l'une contre l'autre.

13. Procédé permettant de relier respectivement deux bandes de matériau (MB1, MB2) par l'intermédiaire d'une pièce de liaison (VS) en forme de bande, comportant les étapes consistant à :
a. fournir une pièce de liaison (VS) reposant à plat sur une face inférieure (UVS) et deux bandes de matériau (MB1, MB2) à relier par l'intermédiaire de la pièce de liaison (VS), lesquelles sont disposées en butée l'une contre l'autre avec respectivement un bord latéral tourné l'un vers l'autre et en reposant à plat respectivement au moins partiellement avec une face inférieure (US1, US2) sur une face supérieure (OVS) de la pièce de liaison (VS) ;
b. chauffer au moins partiellement les faces inférieures (US1, US2) respectives des bandes de matériau (MB1, MB2), les bords latéraux des bandes de matériau et la face supérieure (OVS) de la pièce de liaison (VS) dans une zone de liaison de telle sorte qu'il se forme en même temps, dans la zone de liaison (VS) entre chacune des bandes de matériau (MB1, MB2) et la pièce de liaison (VS) ainsi qu'entre les bandes de matériau (MB1, MB2), des zones parallèles entre elles de matériau fondu et/ou mis en fusion des bandes de matériau (MB1, MB2) ainsi que de matériau fondu et/ou mis en fusion de la pièce de liaison (VS), lesquelles zones se fondent de préférence les unes dans les autres sans espacement ;
c. appliquer de la pression dans la zone de liaison sur les bandes de matériau (MB1, MB2) à partir de leurs faces supérieures (OS1, OS2) immédiatement après le chauffage pour la formation simultanée de respectivement une liaison entre chacune des bandes de matériau (MB1, MB2) et la pièce de liaison (VS) ainsi que d'une autre liaison entre les bandes de matériau (MB1, MB2) lors du refroidissement du matériau des bandes de matériau (MB1, MB2) fondu et/ou mis en fusion dans les zones par chauffage et du matériau de la pièce de liaison (VS) fondu et/ou mis en fusion, dans lequel les liaisons s'étendent parallèlement entre elles.

14. Procédé selon la revendication 13, dans lequel le chauffage de la face inférieure (US1, US2) des bandes de matériau (MB1, MB2), des bords latéraux des bandes de matériau et de la face supérieure (OVS) de la pièce de liaison (VS) dans la zone de liaison est effectué au moyen d'un appareil de liaison mobile selon l'une des revendications 1 à 12.
